# EUROPEAN PATENT SPECIFICATION

(11) **EP 2 923 983 B1**
(45) Date of publication and mention of the grant of the patent: **30.05.2018**
(21) Application number: 15159969.3
(22) Date of filing: 19.03.2015
(51) Int. Cl.: B65H 37/04, D06H 5/00, B29C 65/52, B29C 65/78, B29C 65/00, B29C 65/40, B29C 65/48, A41H 43/04, A41D 27/24

(54) **CLOTH BONDING APPARATUS AND CLOTH FEED MECHANISM OF CLOTH BONDING APPARATUS**
TUCHBINDEVORRICHTUNG UND TUCHZUFÜHRMECHANISMUS DER TUCHBINDEVORRICHTUNG
APPAREIL DE LIAISON DE TISSU ET MÉCANISME D'ALIMENTATION DE TISSU D'UN APPAREIL DE LIAISON DE TISSU

(30) Priority: 28.03.2014 JP 2014067395
(43) Date of publication of application: 30.09.2015
(73) Proprietor: Brother Kogyo Kabushiki Kaisha, Nagoya-shi, Aichi 467-8561 (JP)
(72) Inventor: Umeda, Kazutoshi, Aichi 467-8562 (JP); Iwakoshi, Hiroyasu, Aichi 467-8562 (JP); Shibata, Itaru, Aichi 467-8562 (JP); Minagawa, Yuichiro, Aichi 467-8562 (JP)
(74) Representative: Prüfer & Partner mbB Patentanwälte · Rechtsanwälte

(56) References cited:
- EP-A1- 2 216 162
- US-A- 4 608 114
- US-A1- 2003 010 439
- US-A1- 2011 083 803

## Description

### BACKGROUND

The present invention relates to a cloth bonding apparatus that applies adhesive to a cloth and bonds the cloth to another cloth while feeding the cloths, and to a cloth feed mechanism of the cloth bonding apparatus.

US 2011/0083803 A1 discloses a fabric welding machine including a base, a welding machine body, and a support beam. A first roller is positioned adjacent to the first end of the support beam opposite the welding machine body. A swing arm with a body end and a roller end is attached to the welding machine body. The roller end is opposed the welding machine end and is configured to move to a vertical position and a horizontal position.

US 4, 608, 114 discloses a seal tape sticking device for applying seal tape to sheet-like material wherein an adhesive tape is fed together with a portion of the material in a feed direction and pressed between a pair of opposed rollers. The device includes a fixed arm with a common roller mounted at the distal end thereof, a first movable arm extending across the feed direction with a first positional roller at the distal end thereof, a second movable arm arranged along the feed direction with a second positional roller at the distal end thereof, and a power transmitting mechanism for alternately moving the first and second arms and the rollers thereon into and out of an operating position and their respective stand-by positions.

A cloth bonding apparatus bonds two cloths using an adhesive (refer to Japanese Laid-Open Patent Publication No. 2010-180486, for example). The cloth bonding apparatus is provided with a base portion, a pillar and an arm portion. The base portion is a base having an upper surface that extends in a horizontal direction. The pillar extends upward from an end portion of the base portion. The arm portion extends laterally from the upper end of the pillar. The cloth bonding apparatus is provided with a feed mechanism and a nozzle in a position where the leading end of the arm portion faces the base portion. The feed mechanism is provided with two rollers. The upper roller is provided below the leading end of the arm portion. The lower roller is provided on the base portion, in a position below the upper roller. The feed mechanism uses the upper roller and the lower roller to clamp and feed the two cloths that are to be bonded. The nozzle applies the adhesive between the two cloths. The nozzle is disposed on the upstream side of the feed mechanism in the feed direction of the cloths. The feed mechanism presses the adhesive sandwiched between the two cloths using the upper roller and the lower roller, and thus bonds the cloths together.

### SUMMARY

However, the cloth bonding apparatus bonds the two cloths placed on the upper surface of the base portion while moving the two cloths in the horizontal direction. As a result, it is difficult to bond the cloths that form curved surfaces of a three-dimensional shape or the like after the cloths are bonded together.

It is an object of the present invention to provide a cloth bonding apparatus and a cloth feed mechanism of the cloth bonding apparatus that can easily bond cloths that form curved surfaces of a three-dimensional shape or the like after the cloths are bonded together.

A cloth bonding apparatus according to a first aspect of the present invention includes a nozzle that discharges an adhesive onto a cloth, a first feed roller that is disposed on a downstream side in a feed direction of the cloth with respect to the nozzle and that feeds the cloth, a second feed roller that clamps the cloth between the first feed roller and the second feed roller and feeds the cloth in cooperation with the first feed roller, a base portion that is a base of the cloth bonding apparatus, and a cloth feed mechanism that is held by the base portion and that has the second feed roller. The cloth feed mechanism includes a feed arm portion, a drive portion and a transmission portion. The feed arm portion has a base end portion that is held by the base portion. The feed arm portion is provided with the second feed roller on a leading end portion on an opposite side to the base end portion, in a position below the first feed roller and facing the first feed roller. The drive portion is provided on the base end portion and generates power that drives the second feed roller. The transmission portion is provided in an intermediate portion between the leading end portion and the base end portion, and transmits the power generated by the drive portion to the second feed roller. The cloth feed mechanism is capable of being attached to the base portion selectively between a first mode and a second mode. The first mode is a mode in which the feed arm portion extends in an up-down direction from the base end portion toward the leading end portion, and in which the second feed roller is supported above the feed arm portion. The second mode is a mode in which the feed arm portion extends in a horizontal direction from the base end portion toward the leading end portion, and in which the second feed roller is supported horizontally from an upstream side in the feed direction.

The feed arm portion extends from the base end portion toward the leading end portion. Therefore, the cloth that forms a three-dimensional shape after bonding does not interfere with the leading end portion, and the feed arm portion does not inhibit the feeding of the cloth. The plurality of modes of the cloth feed mechanism are interchangeable with respect to the base portion. The cloth feed mechanism can be formed as a unit, and the feed arm portion in a form that accords with the shape after bonding of cloths to be bonded together can be mounted on the cloth bonding apparatus. Therefore, the cloth bonding apparatus can bond the cloths that form a variety of shapes after bonding.

In the cloth bonding apparatus according to the first aspect, an axial direction of an output shaft of the drive portion may be a first direction that is orthogonal to the feed direction and that is parallel to an axial direction of the second feed roller. Since the axial direction of the output shaft is along the first direction, when a drive belt, a transmission gear and the like, for example, are used as the transmission portion, the drive portion can easily transmit power without changing a transmission direction of the power. Thus, the cloth bonding apparatus makes it possible to simplify the structure of the feed arm portion.

In the cloth bonding apparatus according to the first aspect, the drive portion of the cloth feed mechanism may be provided in a position that is closer to the base portion than the second feed roller and the transmission portion in the first direction. In the cloth bonding apparatus, the drive portion that occupies a relatively large space is disposed further to the base portion side than the second feed roller and the transmission portion, and the drive portion is not disposed on the outside of the base portion with respect to a position between the first feed roller and the second feed roller. It is thus possible to downsize the whole apparatus.

In the cloth bonding apparatus according to the first aspect, the cloth feed mechanism may include a drive storage portion that stores the drive portion, and may include a mounting portion that is fixed to the base portion and that has a wall portion to which the drive storage portion is attached. The wall portion may have an elongated hole that has a major axis extending in the first direction. The drive storage portion of the cloth feed mechanism may be capable of being attached to the mounting portion within a range of the elongated hole. Since the mounting portion moves the base end portion of the feed arm portion in the first direction, the cloth bonding apparatus can change the position where the first feed roller faces the second feed roller, in the first direction. Therefore, the cloth bonding apparatus can adjust the position of the feed arm portion in accordance with the cloths to be bonded together, and can be applied to bonding of a variety of forms of cloths.

In the cloth bonding apparatus according to the first aspect, the intermediate portion of the feed arm portion may have a cylindrical shape inside which the transmission portion is disposed. The leading end portion of the feed arm portion may be positioned on an extended line of the cylindrical shape of the intermediate portion. The second feed roller may be exposed to the outside from one of both walls, in the first direction, of the leading end portion of the feed arm portion. Since the second feed roller is disposed such that it is exposed to the outside from one of both the walls, in the first direction, of the leading end portion of the feed arm portion, the cloth bonding apparatus can select the cloth feed mechanism that accords with the shape after bonding of the cloths to be bonded together.

In the cloth bonding apparatus according to the first aspect, the intermediate portion of the feed arm portion may have a cylindrical shape inside which the transmission portion is disposed. The leading end portion of the feed arm portion may be positioned on an extended line of the cylindrical shape of the intermediate portion. The second feed roller may be positioned between both walls, in the first direction, of the leading end portion of the feed arm portion. Since the second feed roller is disposed between both the walls, in the first direction, of the leading end portion of the feed arm portion, the cloth bonding apparatus can select the cloth feed mechanism that accords with the shape after bonding of the cloths to be bonded together.

According to a second aspect of the present invention, there is provided a cloth feed mechanism of a cloth bonding apparatus that includes a first feed roller that is disposed on a downstream side in a feed direction of a cloth with respect to a nozzle, which discharges an adhesive onto the cloth, and that feeds the cloth and a second feed roller that clamps the cloth between the first feed roller and the second feed roller and feeds the cloth in cooperation with the first feed roller. The cloth feed mechanism includes a feed arm portion, a drive portion, and a transmission portion. The feed arm portion has a base end portion that is held by a base portion, which is a base of the cloth bonding apparatus. The feed arm portion is provided with the second feed roller on a leading end portion on an opposite side to the base end portion, in a position below the first feed roller and facing the first feed roller. The drive portion is provided on the base end portion and generates power that drives the second feed roller. The transmission portion is provided in an intermediate portion between the leading end portion and the base end portion, and transmits the power generated by the drive portion to the second feed roller. The cloth feed mechanism is capable of being attached to the base portion selectively between a first mode and a second mode. The first mode is a mode in which the feed arm portion extends in an up-down direction from the base end portion toward the leading end portion, and in which the second feed roller is supported above the feed arm portion. The second mode is a mode in which the feed arm portion extends in a horizontal direction from the base end portion toward the leading end portion, and in which the second feed roller is supported horizontally from an upstream side in the feed direction.

The feed arm portion extends from the base end portion toward the leading end portion. Therefore, the leading end portion of the feed arm portion does not interfere with the cloth that forms a three-dimensional shape after bonding, and the feed arm portion does not inhibit the feeding of the cloth. The plurality of modes of the cloth feed mechanism are interchangeable with respect to the base portion. Therefore, the cloth feed mechanism can feed the cloths that form a variety of shapes after bonding.

In the cloth feed mechanism according to the second aspect, an axial direction of an output shaft of the drive portion may be a first direction that is orthogonal to the feed direction and that is parallel to an axial direction of the second feed roller. Since the axial direction of the output shaft is along the first direction, when a drive belt, a transmission gear and the like, for example, are used as the transmission portion, the drive portion can easily transmit power without changing a transmission direction of the power. Thus, the cloth feed mechanism makes it possible to simplify the structure of the feed arm portion.

In the cloth feed mechanism according to the second aspect, the intermediate portion of the feed arm portion may have a cylindrical shape inside which the transmission portion is disposed. The leading end portion of the feed arm portion may be positioned on an extended line of the cylindrical shape of the intermediate portion. The second feed roller may be exposed to the outside from one of both walls, in the first direction, of the leading end portion of the feed arm portion. Since the second feed roller is disposed such that it is exposed to the outside from one of both the walls, in the first direction, of the leading end portion of the feed arm portion, it is possible to use the cloth feed mechanism that is appropriate for the cloths to be bonded together.

In the cloth feed mechanism according to the second aspect, the intermediate portion of the feed arm portion may have a cylindrical shape inside which the transmission portion is disposed. The leading end portion of the feed arm portion may be positioned on an extended line of the cylindrical shape of the intermediate portion. The second feed roller may be positioned between both walls, in the first direction, of the leading end portion of the feed arm portion. Since the second feed roller is disposed between both the walls, in the first direction, of the leading end portion of the feed arm portion, it is possible to use the cloth feed mechanism that is appropriate for the cloths to be bonded together.

### BRIEF DESCRIPTION OF THE DRAWINGS

Exemplary embodiments of the present disclosure will be described below in detail with reference to the accompanying drawings in which:
FIG. 1 is a perspective view of a cloth bonding apparatus 1 to which a cloth feed mechanism 12 has been attached;
FIG. 2 is a front view of the cloth bonding apparatus 1 to which the cloth feed mechanism 12 has been attached;
FIG. 3 is a left side view of the cloth bonding apparatus 1 to which the cloth feed mechanism 12 has been attached;
FIG. 4 is a perspective view of the cloth bonding apparatus 1, and shows the interior of a head portion 5;
FIG. 5 is a perspective drawing showing an internal structure of the cloth bonding apparatus 1;
FIG. 6 is a diagram showing positional relationships between an upper roller 18, a lower roller 13 and a nozzle 17 (when the nozzle 17 is in a close position);
FIG. 7 is a diagram showing positional relationships between the upper roller 18, the lower roller 13 and the nozzle 17 (when the nozzle 17 is in a retracted position);
FIG. 8 is an exploded perspective view of the cloth bonding apparatus 1 shown in FIG. 1;
FIG. 9 is a perspective view of the cloth feed mechanism 12;
FIG. 10 is a front view of the cloth feed mechanism 12;
FIG. 11 is a perspective view of a cloth feed mechanism 200;
FIG. 12 is a perspective view of a cloth feed mechanism 250;
FIG. 13 is a perspective view of a cloth bonding apparatus 100 to which a cloth feed mechanism 320 has been attached;
FIG. 14 is a left side view of the cloth bonding apparatus 100 to which the cloth feed mechanism 320 has been attached;
FIG. 15 is an exploded perspective view of the cloth bonding apparatus 100 shown in FIG. 13;
FIG. 16 is a perspective view of the cloth feed mechanism 320; and
FIG. 17 is a plan view of the cloth feed mechanism 320.

### DETAILED DESCRIPTION

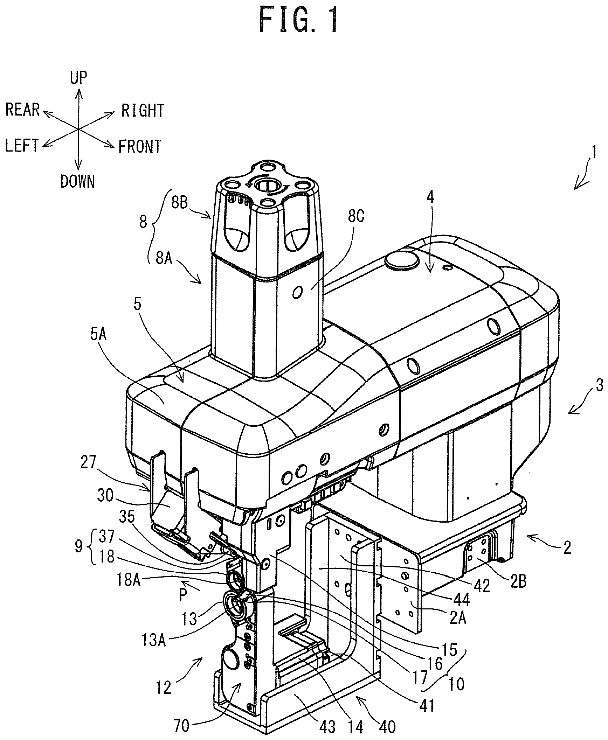

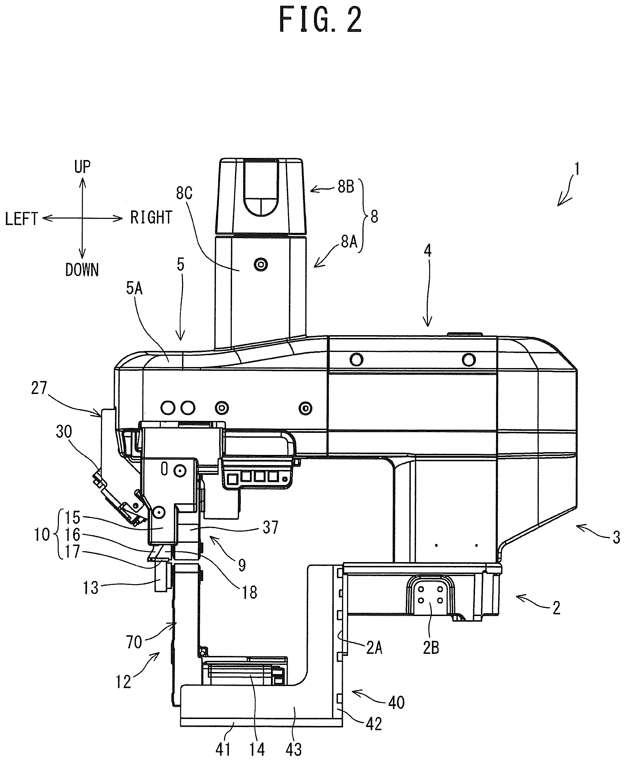

An embodiment of the present invention will be explained with reference to the drawings. An overall configuration of a cloth bonding apparatus 1 will be explained with reference to FIG. 1 to FIG. 3. In the explanation below, the up and down, the left and right, and the front and rear shown by arrows in the drawings are used. The cloth bonding apparatus 1 applies an adhesive between an upper cloth and a lower cloth that are arranged facing each other in the up-down direction, while feeding the upper cloth and the lower cloth in a feed direction P. The cloth bonding apparatus 1 presses a section to which the adhesive has been applied, and thus bonds the upper cloth and the lower cloth. The feed direction P of the cloth bonding apparatus 1 is a direction from the front side to the rear side. The front side is the upstream side in the feed direction P and the rear side is the downstream side in the feed direction P.

As shown in FIG. 1 to FIG. 3, the cloth bonding apparatus 1 is provided with a base portion 2, a pillar 3, an arm portion 4, a head portion 5, a nozzle swinging mechanism 10, an upper roller mechanism 9, a cloth feed mechanism 12 and a mounting member 40. The base portion 2 is a base of the cloth bonding apparatus 1 and has a substantially cuboid shape. Fixed portions 2B are respectively provided on a lower portion of a front surface and a lower portion of a rear surface of the base portion 2. The base portion 2 is disposed in a mounting opening that is provided on a table. The fixed portions 2B of the base portion 2 and the table are fixed using bent metal fittings. The left surface of the base portion 2 is provided with a plate-shaped mounting surface 2A. The mounting surface 2A is used to fix the mounting member 40 to the left side of the base portion 2. The mounting member 40 positions and fixes the cloth feed mechanism 12 in the left-right direction, and attaches the cloth feed mechanism 12 to the base portion 2.

The pillar 3 has a column shape and extends upward from the right end side of an upper surface of the base portion 2. The rear end side of an upper portion of the pillar 3 bulges to the rear. The upper end of the pillar 3 is connected to the arm portion 4. The arm portion 4 extends in the left-right direction. The left end of the arm portion 4 protrudes further to the left than the left side surface of the pillar 3. The head portion 5 is provided on the left end of the arm portion 4. The head portion 5 has a substantially cuboid shape and protrudes to the left. The head portion 5 protrudes further to the left than the base portion 2. The head portion 5 has a cover 5A.

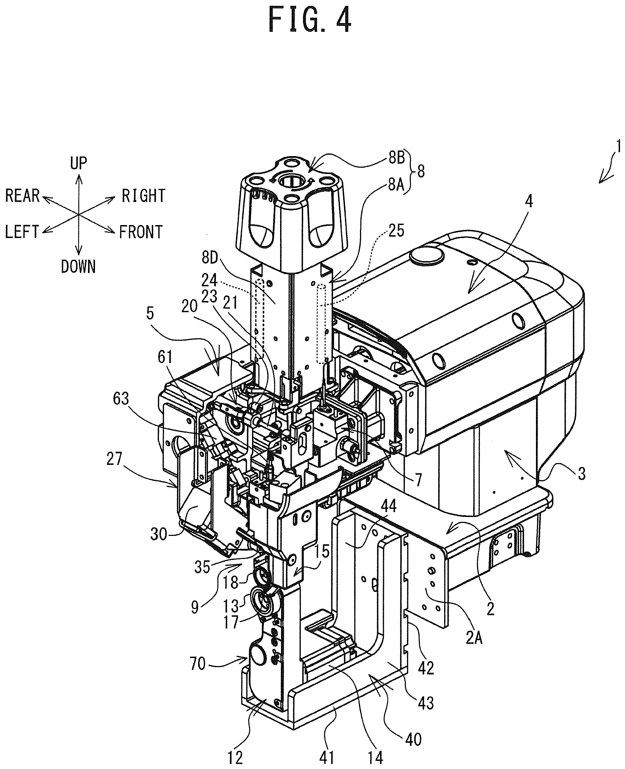

A structure of the head portion 5 and an internal structure of the cloth bonding apparatus 1 will be explained specifically with reference to FIG. 4 to FIG. 7. The head portion 5 supports a pump portion 7, a storage portion 8, the upper roller mechanism 9, the nozzle swinging mechanism 10 and the like inside the cover 5A (refer to FIG. 1). The pump portion 7 is provided to the right and the front of the head portion 5. The storage portion 8 is provided to the rear of the pump portion 7. The storage portion 8 has a substantially cuboid shape and is positioned on the rear right end side of the head portion 5. The storage portion 8 extends in the up-down direction and has a bottomed cylindrical shape having an upper portion opening. The storage portion 8 is provided with a main body portion 8A and a lid portion 8B. The main body portion 8A is provided with a cover 8C and a storage chamber 8D. The lid portion 8B is provided on an upper portion of the storage portion 8, and covers the upper portion opening of the storage portion 8. The cover 8C has a square tube shape and covers the periphery of the storage chamber 8D. The storage chamber 8D has a bottomed cylindrical shape having an upper portion opening. The storage chamber 8D stores the adhesive in a reservoir portion inside the storage chamber 8D. The storage chamber 8D is provided with heaters 24 and 25 on both sides of the reservoir portion. The heaters 24 and 25 heat the reservoir portion. The adhesive has heat melting properties and is melted and liquefied by the heaters 24 and 25.

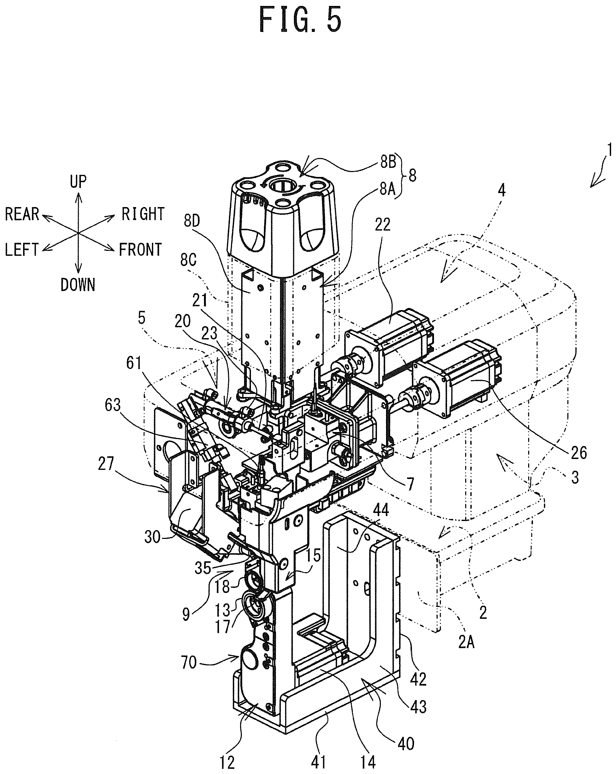

The pump portion 7 is provided with a supply passage, a gear pump, a first motor 26 (refer to FIG. 5) and the like. The supply passage and the gear pump are provided inside the pump portion 7. The supply passage leads the adhesive from the storage portion 8 to the gear pump. The gear pump is provided inside the head portion 5. The gear pump sucks an appropriate amount of the adhesive from the storage portion 8, and supplies the adhesive to a nozzle 17 accurately. As shown in FIG. 5, the first motor 26 is provided inside the arm portion 4. The first motor 26 drives the gear pump.

As shown in FIG. 1 to FIG. 4, the nozzle swinging mechanism 10 is provided on a front portion of the head portion 5. The nozzle swinging mechanism 10 is provided with the nozzle 17, a nozzle support portion 16 and a nozzle lever 15. A lower portion of the nozzle 17 is provided with a plurality of discharge ports that discharge the adhesive. The nozzle 17 is disposed in a position on the upper surface of the base portion 2 in the up-down direction, and in a position on the upstream side in the feed direction P of the position where the upper roller 18 and the lower roller 13 face each other. The nozzle 17 extends substantially in a rod shape in the left-right direction and has substantially the same length as the width of the upper roller 18.

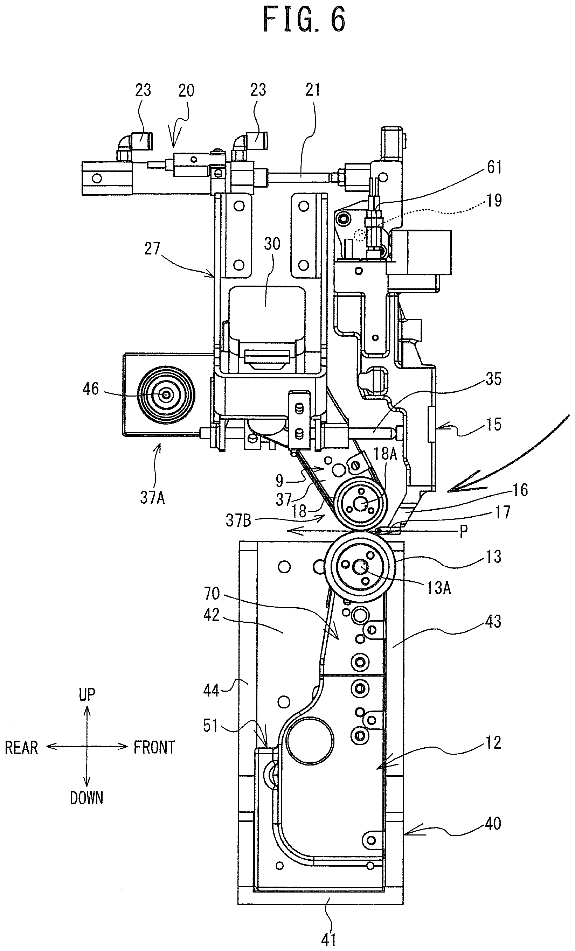

The nozzle support portion 16 supports a left end portion of the nozzle 17. The nozzle support portion 16 extends forward and upward, and its interior has a passage for the adhesive. The nozzle lever 15 has an arm shape and extends downward from a base end portion toward a leading end portion of the nozzle lever 15, on the front left side of the head portion 5. The nozzle lever 15 can swing in the front-rear direction around a rotating shaft 19 (refer to FIG. 6). The rotating shaft 19 extends in the left-right direction. The right end of the rotating shaft 19 connects to the pump portion 7, and the left end of the rotating shaft 19 supports the nozzle lever 15. The rotating shaft 19 is internally provided with a passage for the adhesive. The base end portion of the nozzle lever 15 is provided on the front left end side inside the head portion 5. The nozzle lever 15 extends in the up-down direction such that its leading end portion is directed downward. The upper end of the nozzle support portion 16 is fixed to the leading end portion of the nozzle lever 15. The nozzle lever 15 is internally provided with a passage for the adhesive. The nozzle lever 15 is provided with a heater 61 in the vicinity of the passage provided inside the nozzle lever 15. The passages of the rotating shaft 19, the nozzle lever 15 and the nozzle support portion 16 cause the adhesive supplied by the gear pump to flow toward the nozzle 17.

An air cylinder 20 is provided on the upper left side of the head portion 5, on the downstream side of the nozzle lever 15 in the cloth feed direction. The air cylinder 20 is provided with an air inlet 23. An intake and exhaust hose is connected to the air inlet 23. The cloth bonding apparatus 1 controls the intake and exhaust of compressed air from the intake and exhaust hose to the air inlet 23. The position of a piston that is provided inside the air cylinder 20 moves under the control of the air intake and exhaust. A rod-like movable portion 21 extends in the front-rear direction and is connected to the piston. When the piston moves, the movable portion 21 moves in the front-rear direction. As shown in FIG. 6, a leading end portion of the movable portion 21 is rotatably connected to an upper end portion of the nozzle lever 15.

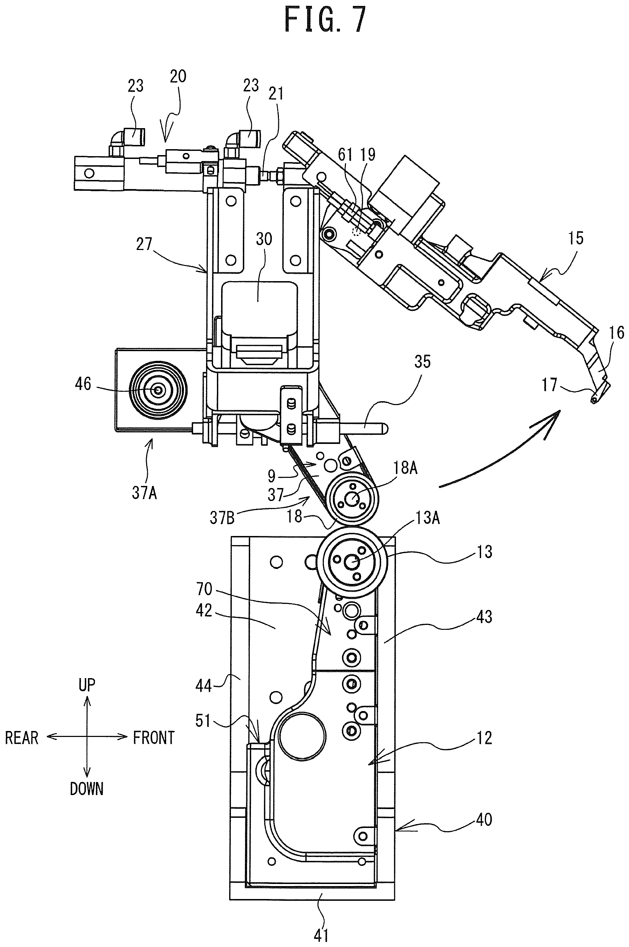

When the movable portion 21 of the air cylinder 20 moves forward, the nozzle lever 15 swings significantly around the rotating shaft 19 and the nozzle 17 moves to a close position. As shown in FIG. 7, when the movable portion 21 of the air cylinder 20 moves rearward, the nozzle lever 15 swings significantly around the rotating shaft 19, and the nozzle 17 moves to a retracted position. The close position is a position in which the nozzle 17 approaches a contact portion of the upper roller 18 and the lower roller 13 from the front side. When a cloth bonding operation is performed, the nozzle 17 moves to the close position. The retracted position is a position in which the nozzle 17 has been separated, significantly to the front, from the contact portion of the upper roller 18 and the lower roller 13. When maintenance etc. of the nozzle 17 is performed, the nozzle 17 moves to the retracted position.

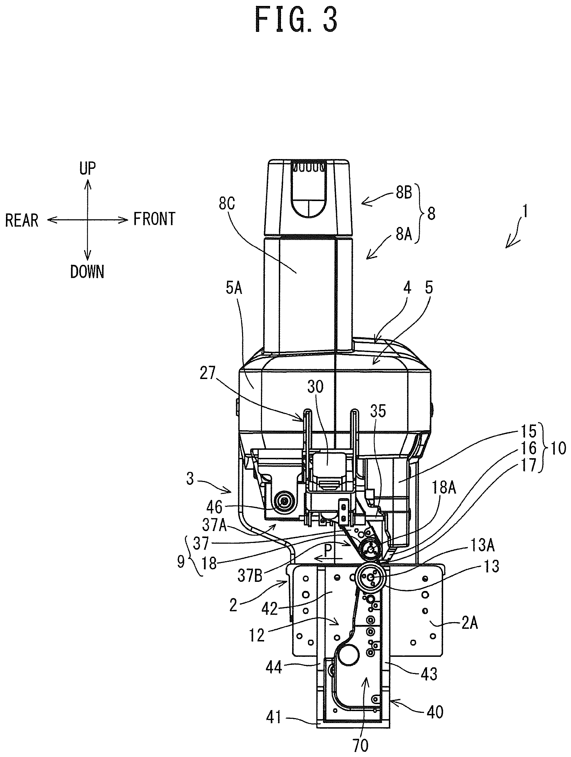

As shown in FIG. 6, when the nozzle 17 is positioned in the close position, a nozzle gap is formed between the nozzle 17 and the surface of the lower roller 13. The nozzle gap is a gap to secure a distance that is suitable for applying the adhesive that is discharged by the nozzle 17 onto the upper surface of a cloth to be bonded to another cloth. A pulse motor 30 is provided on a lower portion of the left end of the head portion 5, via a mounting member 27. The pulse motor 30 moves a rod-like stopper 35 (refer to FIG. 3) in the front-rear direction. The stopper 35 restricts the rearward movement of the leading end portion of the nozzle lever 15, and determines the position of the close position of the nozzle 17, thus adjusting the size of the nozzle gap.

As shown in FIG. 4 and FIG. 5, the upper roller mechanism 9 is provided below the head portion 5. The upper roller mechanism 9 is provided with a support portion 37, the upper roller 18, a second motor 22 and the like. The support portion 37 is provided with a base end portion 37A and a leading end portion 37B (refer to FIG. 3). The base end portion 37A is disposed on a lower portion of the head portion 5. The support portion 37 extends forward from the base end portion 37A and bends downward. Then, the support portion 37 extends diagonally forward and downward toward the leading end portion 37B. The support portion 37 rotatably supports the upper roller 18 on the left side surface of the leading end portion 37B. The upper roller 18 rotates around a rotating shaft 18A that extends in the left-right direction. The upper roller 18 presses and bonds the cloths to be bonded by clamping the cloths in the position where the upper roller 18 and the lower roller 13 face each other, and feeds the cloths in the feed direction P. The second motor 22 is provided inside the arm portion 4 to the right of the storage chamber 8D. The second motor 22 is positioned to the rear of the first motor 26. The power of the second motor 22 is transmitted to the upper roller 18 by a plurality of pulleys and belts etc. that are provided inside the support portion 37.

A support shaft 46 (refer to FIG. 3), whose axis extends in the left-right direction, is provided in a position below the left rear end of the head portion 5. Using the support shaft 46, the head portion 5 supports the base end portion 37A of the support portion 37 such that the leading end portion 37B of the support portion 37 can swing in the up-down direction. The head portion 5 is internally provided with an air cylinder 63. The air cylinder 63 is driven by the pressure of air delivered by a compressor, and presses the leading end portion 37B of the support portion 37 downward. The air cylinder 63 maintains a state in which the upper roller 18 is in contact with the lower roller 13.

The cloth feed mechanism 12 is provided to the left of the base portion 2, in a position below the head portion 5. The cloth feed mechanism 12 is attached to the mounting surface 2A of the base portion 2 using the mounting member 40.

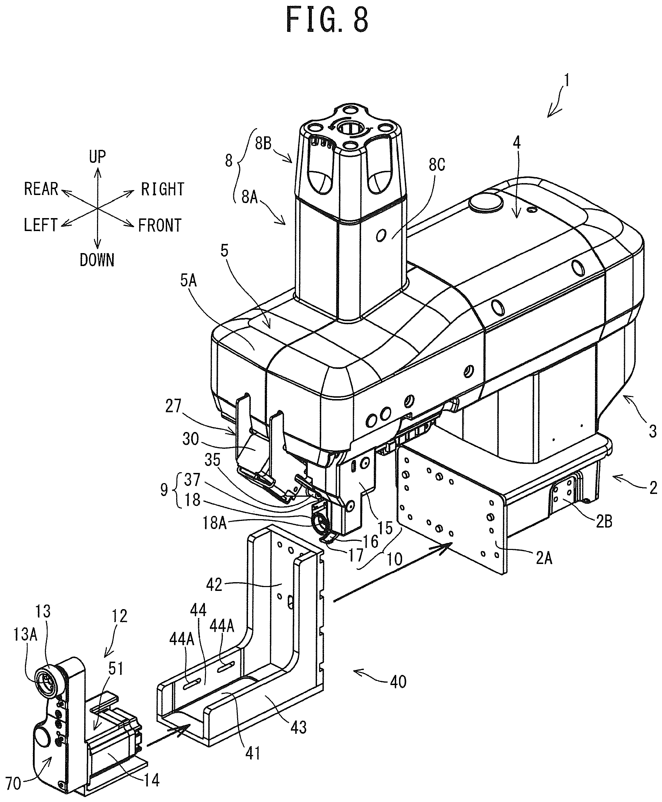

A structure of the mounting member 40 will be explained with reference to FIG. 8 to FIG. 10. As shown in FIG. 8, the mounting member 40 is a metal member that is formed as a substantially U-shaped groove when viewed from the left side, and is formed substantially in an L shape when viewed from the front. The mounting member 40 is provided with a first bottom wall 41, a second bottom wall 42, a first side wall 43 and a second side wall 44. The first bottom wall 41 is a rectangular plate-shaped member. The second bottom wall 42 is a rectangular plate-shaped member having the same length as the first bottom wall 41 in the short side direction. The second bottom wall 42 is arranged in a standing condition from one end portion, in the long side direction, of the first bottom wall 41. The first side wall 43 and the second side wall 44 are each formed substantially in an L shape when viewed from the front, and are provided as a pair. The first side wall 43 and the second side wall 44 are each arranged in a standing condition along both edge portions, in the short side direction, of the first bottom wall 41 and the second bottom wall 42.

The second side wall 44 has two elongated holes 44A (refer to FIG. 8) in a section that stands from the first bottom wall 41. The two elongated holes 44A each have a major axis that extends in parallel with the long side direction of the first bottom wall 41, and are arranged side by side in the long side direction of the first bottom wall 41. In the present embodiment, the two elongated holes 44A each have the major axis in the left-right direction.

When the cloth feed mechanism 12 is attached to the mounting surface 2A of the base portion 2, the mounting member 40 is oriented such that the first bottom wall 41 is on the bottom surface side and the second bottom wall 42 is vertical. A motor storage portion 51 is placed on an upper surface of the first bottom wall 41 such that, in the cloth feed mechanism 12, a drive motor 14 is closer to the second bottom wall 42 than a portion supporting the lower roller 13. The cloth feed mechanism 12 is fixed to the mounting member 40 by the tightening of screws, which are passed through the elongated holes 44A of the second side wall 44 of the mounting member 40, into screw holes that are provided in a rear wall of the motor storage portion 51. The motor storage portion 51 can be fixed to the mounting member 40 within a range of the elongated holes 44A of the second side wall 44. The cloth feed mechanism 12 is assembled to the cloth bonding apparatus 1 in a state in which the lower roller 13 is in an upper position in the cloth feed mechanism 12. An outer surface of the second bottom wall 42 is fixed to the mounting surface 2A of the base portion 2 using screws. The lower roller 13 faces the upper roller 18, and their surfaces come into contact with each other. The attachment of the cloth feed mechanism 12 to the cloth bonding apparatus 1 is complete.

There are cases in which an operator wants to change the position in the left-right direction of the lower roller 13 with respect to the upper roller 18, depending on a bonding position etc. of the cloths. The cloth bonding apparatus 1 can adjust the position of the lower roller 13 with respect to the upper roller 18 in the left-right direction, by changing the position of the cloth feed mechanism 12 with respect to the first bottom wall 41 of the mounting member 40. The position of the cloth feed mechanism 12 can be adjusted within the range of the elongated holes 44A of the second side wall 44. The drive motor 14 that drives the lower roller 13 is assembled to the cloth feed mechanism 12. Therefore, it is possible to easily change the position of the cloth feed mechanism 12 together with the drive motor 14, without changing the structure by which the power of the drive motor 14 is transmitted to the lower roller 13.

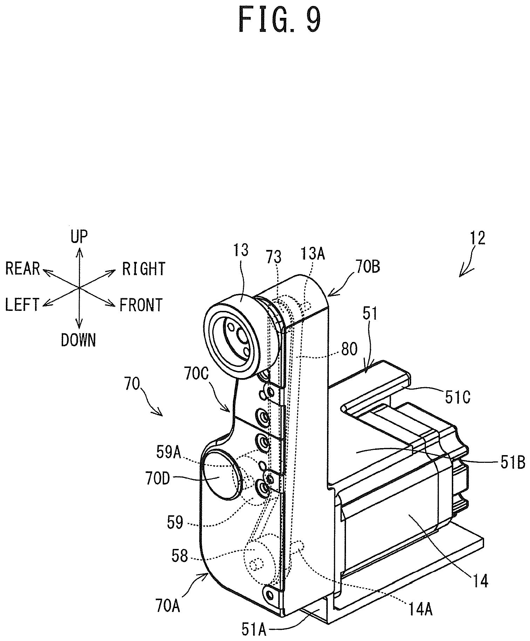

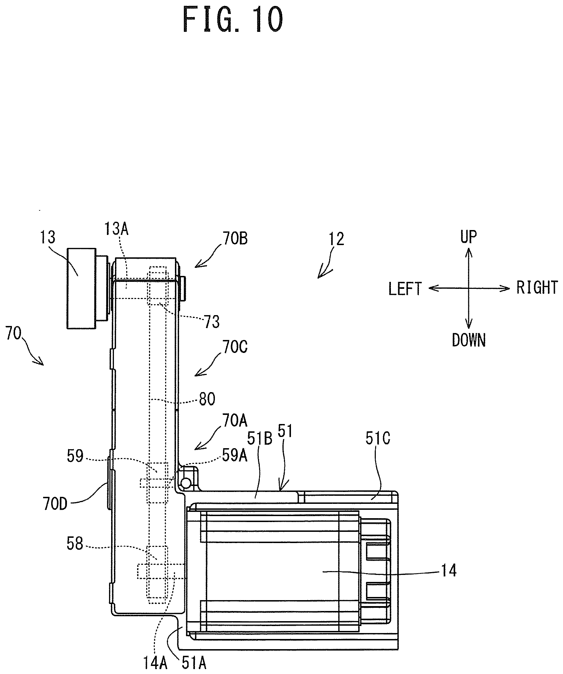

A structure of the cloth feed mechanism 12 will be explained with reference to FIG. 9 and FIG. 10. The cloth feed mechanism 12 is a unit that can be attached to and removed from the base portion 2 via the mounting member 40. The cloth feed mechanism 12 has a substantially L shape when viewed from the front. The cloth feed mechanism 12 is provided with the motor storage portion 51, the drive motor 14, a roller support portion 70, the lower roller 13 and a belt 80.

The motor storage portion 51 extends in the left-right direction. The cloth feed mechanism 12 is formed such that the roller support portion 70 extends in the up-down direction and the lower roller 13 that is disposed facing the upper roller 18 is supported above the roller support portion 70. The cloth feed mechanism 12 is of a "column type." The motor storage portion 51 is a substantially cuboid box body that is made of metal, and the front surface and the right side surface are respectively open surfaces. The motor storage portion 51 is provided with a left wall 51A and an upper wall 51B, and internally stores the drive motor 14. The drive motor 14 is arranged such that the axial direction of an output shaft 14A is the left-right direction, and the drive motor 14 is fixed to the left wall 51A of the motor storage portion 51. The output shaft 14A protrudes to the left from a hole that is provided in the left wall 51A of the motor storage portion 51. A cut out portion 51C, which has an L shape in a plan view, is provided in a front right corner portion of the upper wall 51B of the motor storage portion 51.

The roller support portion 70 is a hollow box body that extends in the up-down direction and both the upper end and the lower end are closed. The roller support portion 70 is provided with a base end portion 70A, a leading end portion 70B and an intermediate portion 70C. The base end portion 70A is provided such that it is coupled to the left side of the left wall 51A of the motor storage portion 51. The leading end portion 70B is positioned above the base end portion 70A. The intermediate portion 70C is positioned between the leading end portion 70B and the base end portion 70A. The leading end portion 70B, the base end portion 70A and the intermediate portion 70C have the same width in the left-right direction. A rear wall surface of the base end portion 70A is gently curved in an arc shape from the rear to the front, from the lower side toward the upper side of the rear wall surface.

A right wall of the base end portion 70A is provided integrally with the left wall 51A of the motor storage portion 51. The output shaft 14A of the drive motor 14 protrudes into the base end portion 70A from the hole that is provided in the left wall 51A of the motor storage portion 51. A left wall of the base end portion 70A is provided with a blocking portion 70D. The blocking portion 70D is a circular member that is provided on the left wall of the base end portion 70A. The blocking portion 70D blocks a circular hole that opens in the left wall of the base end portion 70A.

The roller support portion 70 is provided with a first pulley 58 and a tension pulley 59 inside the base end portion 70A. The first pulley 58 is disposed below the tension pulley 59. A rotating shaft of the first pulley 58 is fixed to the output shaft 14A of the drive motor 14. A rotating shaft 59A of the tension pulley 59 is disposed to the rear of the output shaft 14A. The rotating shaft 59A of the tension pulley 59 has an eccentric shaft on a right end portion of the rotating shaft 59A. The axis center of the eccentric shaft is displaced from the axis center of the rotating shaft 59A. The right wall of the base end portion 70A rotatably supports the eccentric shaft. A left end portion of the rotating shaft 59A has a groove. The groove is recessed in a left end surface of the rotating shaft 59A in the axial direction. A jig can be inserted to the groove. The operator removes the blocking portion 70D from the left wall of the base end portion 70A, and inserts the jig through the hole as far as the groove. When the operator rotates the jig, the tension pulley 59 swings around the eccentric shaft and the position of the tension pulley 59 is changed. Since the position of the tension pulley 59 is changed, it is possible to adjust the tension to be applied to the belt 80.

In the leading end portion 70B of the roller support portion 70, a surface on the upstream side in the feed direction P is positioned vertically above the base end portion 70A and is positioned in the same position as the base end portion 70A in the feed direction P. The roller support portion 70 is provided with the lower roller 13 on the outside of the left wall of the leading end portion 70B. The position of the lower roller 13 is a position where the lower roller 13 is exposed to the outside from the left wall of the leading end portion 70B. The lower roller 13 is disposed in an orientation in which the axial direction of the rotating shaft 13A is along the left-right direction. More specifically, the axial direction of the rotating shaft 13A of the lower shaft 13 and the axial direction of the output shaft 14A of the drive motor 14 are parallel to each other, and are orthogonal to the feed direction P. The rotating shaft 13A protrudes into the leading end portion 70B. The leading end portion 70B rotatably supports the rotating shaft 13A. The roller support portion 70 is provided with a second pulley 73 inside the leading end portion 70B. The second pulley 73 rotates integrally with the lower roller 13 around the rotating shaft 13A of the lower roller 13 as a central axis. An upper wall surface of the leading end portion 70B is curved in an arc shape whose radius of curvature is smaller than that of an outer peripheral surface of the lower roller 13.

The roller support portion 70 internally houses the belt 80. The belt 80 is an endless timing belt and is formed of resin or the like. An inner side surface of the belt 80 is provided with a toothed portion. The toothed portion meshes with a toothed portion that is formed on a rolling contact surface of the first pulley 58 provided inside the base end portion 70A and a toothed portion that is formed on a rolling contact surface of the second pulley 73 provided inside the leading end portion 70B. The tension pulley 59 comes into contact with the outside of the belt 80 from the rear, and applies a tension to the belt 80. The belt 80 may be an endless belt that is not provided with the toothed portion on the inner side surface.

The cloth feed mechanism 12 structured as described above is fixed to the mounting member 40 in a state in which the motor storage portion 51 is directed further to the base portion 2 side than the roller support portion 70. The mounting member 40 fixes the cloth feed mechanism 12 by the tightening of the screws, which are passed through the elongated holes 44A of the second side wall 44, into the screw holes provided in the rear wall of the motor storage portion 51. With the cloth feed mechanism 12, the fastening positions of the screws in the left-right direction can be changed within the range of the elongated holes 44A. More specifically, the mounting member 40 can be adjusted in the left-right direction such that the lower roller 13 is reliably positioned in a facing position where the surface of the lower roller 13 comes into contact with the surface of the upper roller 18. Since the motor storage portion 51 is positioned closer to the base portion 2 than the roller support portion 70, the motor storage portion 51 does not protrude to the left of the facing position where the surface of the lower roller 13 comes into contact with the surface of the upper roller 18. The roller support portion 70 has a narrow width and extends long in the up-down direction. When the operator feeds the cloths having a three-dimensional shape to the facing position, the roller support portion 70 does not easily interfere with the cloths. Therefore, the operator can easily bond the cloths etc. that form, for example, a semispherical shape after bonding.

The cloth feed mechanism 12 can be replaced with other forms of cloth feed mechanisms 200, 250 and 320 in accordance with a shape after bonding the cloths to be bonded together. By adjusting the attachment positions of the cloth feed mechanisms 200, 250 and 320 to the mounting member 40 in the left-right direction, lower roller rollers 213, 263 and 313 can reliably face the upper roller 18. Therefore, the cloth feed mechanisms 200, 250 and 320 can reliably clamp the cloths between the upper roller 18 and the lower rollers 213, 263 and 313, respectively, and can feed the cloths.

The cloth bonding apparatus 1 operates in the following manner at the time of the cloth bonding. The upper roller mechanism 9 presses the support portion 37 downward by driving the air cylinder 63 (refer to FIG. 4 and FIG. 5). The support portion 37 swings around the support shaft 46 as a point of support, and moves the upper roller 18 provided on the leading end portion 37B downward. The surface of the upper roller 18 comes into contact with the surface of the lower roller 13 positioned below the upper roller 18. The upper roller mechanism 9 and the cloth feed mechanism 12 clamp the two cloths to be bonded, at the facing position of the upper roller 18 and the lower roller 13.

The cloth bonding apparatus 1 drives the drive motor 14 of the cloth feed mechanism 12, and rotates the output shaft 14A. When the first pulley 58 rotates in accordance with the rotation of the output shaft 14A, the belt 80 transmits the torque of the output shaft 14A to the second pulley 73. The tension pulley 59 applies a tension to the belt 80 and inhibits the belt 80 from becoming slack. Therefore, the belt 80 efficiently transmits the rotation of the first pulley 58 to the second pulley 73. When the rotating shaft 13A rotates in accordance with the rotation of the second pulley 73, the lower roller 13 rotates. The drive motor 14 rotates the lower roller 13 counter-clockwise when viewed from the left side. The upper roller 18 rotates clockwise when viewed from the left side due to the drive of the second motor 22. The upper roller 18 and the lower roller 13 feed the cloths clamped in the facing position in the feed direction P. The first motor 26 drives the gear pump, and the gear pump supplies the adhesive heated by the heaters 24 and 25 from the storage portion 8 to the nozzle 17. The nozzle 17 discharges the adhesive from the discharge ports and applies the adhesive to the lower cloth. The upper roller 18 and the lower roller 13 feed the lower cloth and the upper cloth while clamping and pressing the lower cloth to which the adhesive has been applied and the upper cloth, thus bonding the two cloths together.

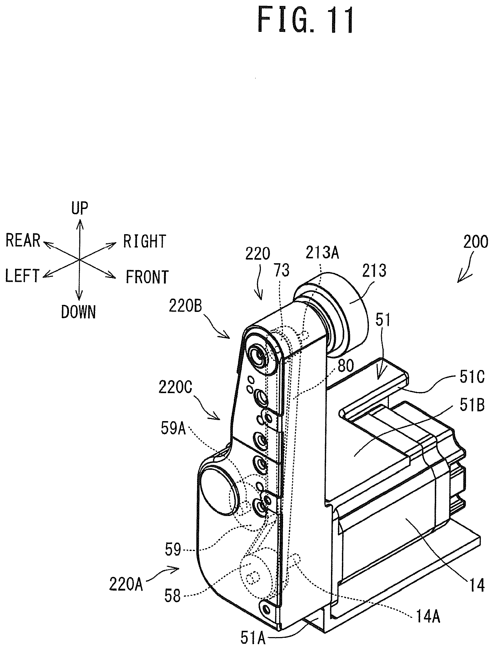

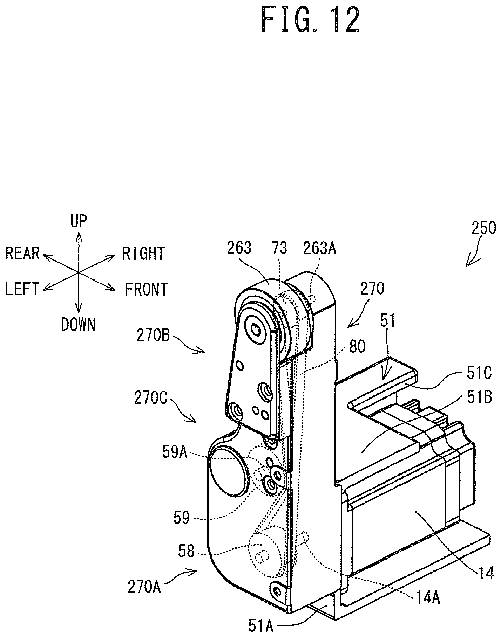

As described above, in accordance with the shape after the bonding of the cloths to be bonded, the other forms of the cloth feed mechanisms 200 and 250 that are other than the cloth feed mechanism 12 can be attached to the cloth bonding apparatus 1. Structures of the other forms of the cloth feed mechanisms 200 and 250 will be explained with reference to FIG. 11 and FIG. 12. In the explanation below, structural elements that are the same as those of the cloth feed mechanism 12 of the above-described embodiment are denoted with the same reference numerals and an explanation thereof is omitted as appropriate.

The cloth feed mechanism 200 is a unit that can be attached to and removed from the base portion 2 via the mounting member 40. The cloth feed mechanism 200 has a substantially L shape when viewed from the front. The cloth feed mechanism 200 is provided with the motor storage portion 51, a roller support portion 220, the lower roller 213 and the belt 80.

The motor storage portion 51 is substantially the same as the motor storage portion 51 (refer to FIG. 9) of the cloth feed mechanism 12. The roller support portion 220 is a box body that extends in the up-down direction and both the ends are closed. The roller support portion 220 is provided with a base end portion 220A, a leading end portion 220B and an intermediate portion 220C. The structure of the roller support portion 220 is substantially the same as that of the roller support portion 70 of the above-described embodiment.

The output shaft 14A of the drive motor 14 protrudes into the base end portion 220A from the hole that is provided in the left wall 51A of the motor storage portion 51. The lower roller 213 is provided on the outside of the right wall of the leading end portion 220B of the roller support portion 220. The position of the lower roller 213 is a position where the lower roller 213 is exposed to the outside from the right wall of the leading end portion 220B. The axial direction of a rotating shaft 213A of the lower roller 213 and the axial direction of the output shaft 14A of the drive motor 14 are parallel to each other, and are orthogonal to the feed direction P. More specifically, the rotating shaft 213A of the lower roller 213 is positioned vertically above the output shaft 14A of the drive motor 14, and in the same position as the output shaft 14A in the feed direction P. The rotating shaft 213A of the lower roller 213 protrudes into the leading end portion 220B. The leading end portion 220B rotatably supports the rotating shaft 213A of the lower roller 213.

When the cloth feed mechanism 200 is attached to the base portion 2, the cloth feed mechanism 200 is fixed to the mounting member 40 in a state in which the motor storage portion 51 is directed further to the base portion 2 side than the roller support portion 220. The mounting member 40 fixes the cloth feed mechanism 200 by the tightening of the screws, which are passed through the elongated holes 44A of the second side wall 44, into the screw holes provided in the rear wall of the motor storage portion 51. The motor storage portion 51 can be fixed to the mounting member 40 within the range of the elongated holes 44A of the second side wall 44. With the cloth feed mechanism 200, the fastening positions of the screws in the left-right direction can be changed within the range of the elongated holes 44A. As long as the lower roller 213 and the upper roller 18 are aligned in the left-right direction and the cloth feed mechanism 200 is fixed to the mounting member 40, the lower roller 213 can reliably face the upper roller 18.

As shown in FIG. 12, the cloth feed mechanism 250 is a unit that can be attached to and removed from the base portion 2 via the mounting member 40. The cloth feed mechanism 250 has a substantially L shape when viewed from the front. The cloth feed mechanism 250 is provided with the motor storage portion 51, a roller support portion 270, the lower roller 263 and the belt 80.

The motor storage portion 51 is substantially the same as the motor storage portion 51 (refer to FIG. 9) of the cloth feed mechanism 12. The roller support portion 270 is a box body that extends in the up-down direction and both the ends are closed. The roller support portion 270 is provided with a base end portion 270A, a leading end portion 270B and an intermediate portion 270C. Structures of the base end portion 270A and the intermediate portion 270C are substantially the same as those of the roller support portion 70 of the above-described embodiment. The output shaft 14A of the drive motor 14 protrudes into the base end portion 270A from the hole that is provided in the left wall 51A of the motor storage portion 51. The leading end portion 270B is positioned vertically above the base end portion 270A and in the same position as the base end portion 270A in the front-rear direction. The roller support portion 270 is provided with the lower roller 263 on the right side of the left wall of the leading end portion 270B. The position of the lower roller 263 is a position between the left wall and the right wall of the leading end portion 270B. The axial direction of a rotating shaft 263A of the lower roller 263 and the axial direction of the output shaft 14A of the drive motor 14 are parallel to each other, and are orthogonal to the feed direction P. More specifically, the rotating shaft 263A of the lower roller 263 is positioned vertically above the output shaft 14A of the drive motor 14, and in the same position as the output shaft 14A in the feed direction P. The rotating shaft 263A of the lower roller 263 protrudes into the leading end portion 270B. The leading end portion 270B rotatably supports the rotating shaft 263A. An upper wall surface of the leading end portion 270B has an opening in which the lower roller 263 can be disposed, and both the left and right sides of the opening are curved in an arc shape whose radius of curvature is smaller than that of an outer peripheral surface of the lower roller 263. On the right side of the lower roller 263, the second pulley 73 rotates integrally with the lower roller 263 around the rotating shaft 263A as a central axis.

When the cloth feed mechanism 250 is attached to the base portion 2, the cloth feed mechanism 250 is fixed to the mounting member 40 in a state in which the motor storage portion 51 is directed further to the base portion 2 side than the roller support portion 270. The mounting member 40 fixes the cloth feed mechanism 250 by the tightening of the screws, which are passed through the elongated holes 44A of the second side wall 44, into the screw holes provided in the rear wall of the motor storage portion 51. The motor storage portion 51 can be fixed to the mounting member 40 within the range of the elongated holes 44A of the second side wall 44. With the cloth feed mechanism 250, the fastening positions of the screws in the left-right direction can be changed within the range of the elongated holes 44A. By adjusting the position in the left-right direction of the cloth feed mechanism 250 with respect to the mounting member 40, the lower roller 263 can reliably face the upper roller 18.

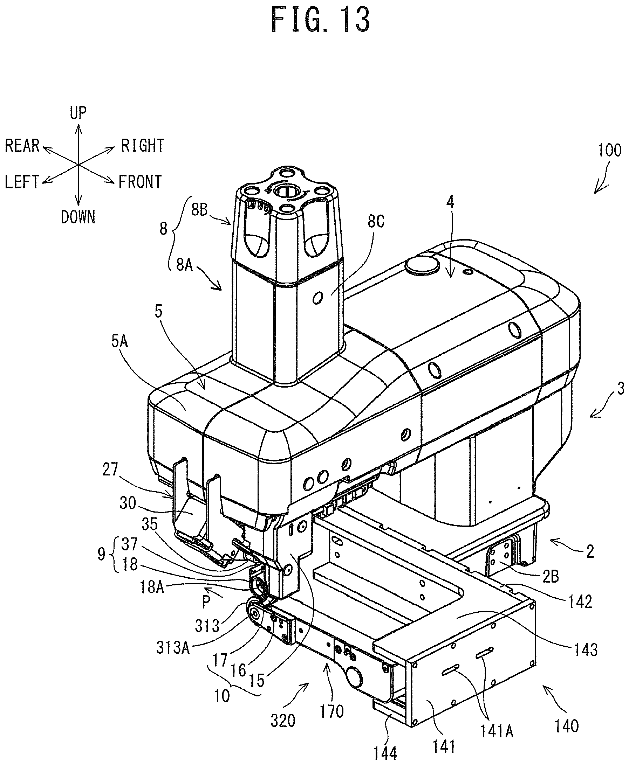

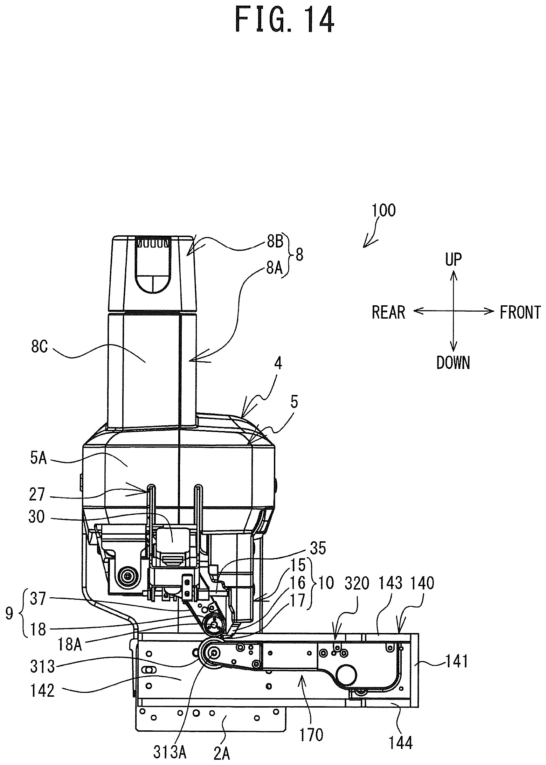

A cloth bonding apparatus 100 that is provided with the other form of the cloth feed mechanism 320 will be explained with reference to FIG. 13 to FIG. 17. In the cloth bonding apparatus 100, in place of the cloth feed mechanism 12 shown in FIG. 1, the cloth feed mechanism 320 can be attached to the mounting surface 2A (refer to FIG. 14) of the base portion 2. The cloth feed mechanism 320 is a so-called "arm type" in which a roller support portion 170 extends in the front-rear direction and the roller support portion 170 supports the lower roller 313, which is disposed facing the upper roller 18, substantially horizontally from the upstream side in the feed direction P. The arm type cloth feed mechanism 320 is used when, for example, the cloths that will form a cylindrical shape after they are bonded together are bonded while the cloths are being fed substantially in the horizontal direction. Structures of the base portion 2, the pillar 3, the arm portion 4 and the head portion 5 of the cloth bonding apparatus 100 are the same as those of the above-described embodiment and an explanation thereof is omitted here.

The cloth feed mechanism 320 is interchangeably attached to the mounting surface 2A (refer to FIG. 14) of the base portion 2 via a mounting member 140. The lower roller 313 is disposed facing the upper roller 18. The axial direction of a rotating shaft 313A of the lower roller 313 and the axial direction of the rotating shaft 18A of the upper roller 18 are each parallel to the left-right direction of the cloth bonding apparatus 100. The cloth feed mechanism 320 rotatably drives the lower roller 313, and feeds the cloths along the feed direction P from the front side to the rear side in cooperation with the upper roller 18. The nozzle 17 is positioned on the upstream side in the feed direction P with respect to the position where the upper roller 18 and the lower roller 313 face each other.

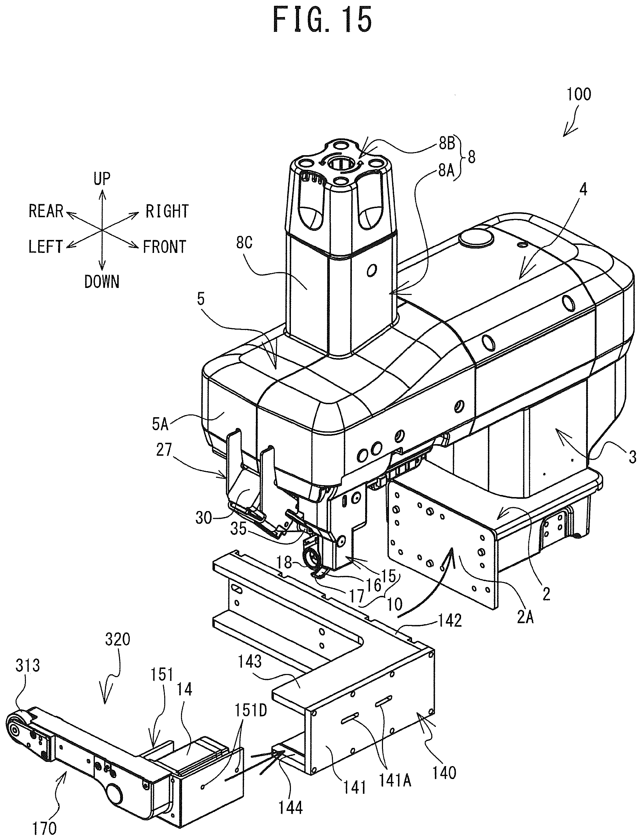

A structure of the mounting member 140 will be explained with reference to FIG. 15. In a similar manner to the mounting member 40 (refer to FIG. 8), the mounting member 140 is a metal member that is formed as a substantially U-shaped groove when viewed from the left side in FIG. 15, and is formed substantially in an L shape in a plan view. The mounting member 140 is provided with a first bottom wall 141, a second bottom wall 142, a first side wall 143 and a second side wall 144. The first bottom wall 141 is a rectangular plate-shaped member and has substantially the same shape as the first bottom wall 41. The second bottom wall 142 is a rectangular plate-shaped member having the same length as the first bottom wall 141 in the short side direction, and is arranged in a standing condition from one end portion, in the long side direction, of the first bottom wall 141. The second bottom wall 142 is longer than the second bottom wall 42 (shown in FIG. 8) in the long side direction. The first side wall 143 and the second side wall 144 are each formed substantially in an L shape in a plan view, and are arranged in a standing condition along both edge portions, in the short side direction, of each of the first bottom wall 141 and the second bottom wall 142.

Two elongated holes 141A are opened in the first bottom wall 141 such that the two elongated holes 141A are arranged side by side in the long side direction of the first bottom wall 141. Each of the two elongated holes 141A has a major axis that extends in parallel with the long side direction of the first bottom wall 141. In the present embodiment, the two elongated holes 141A each have the major axis in the left-right direction.

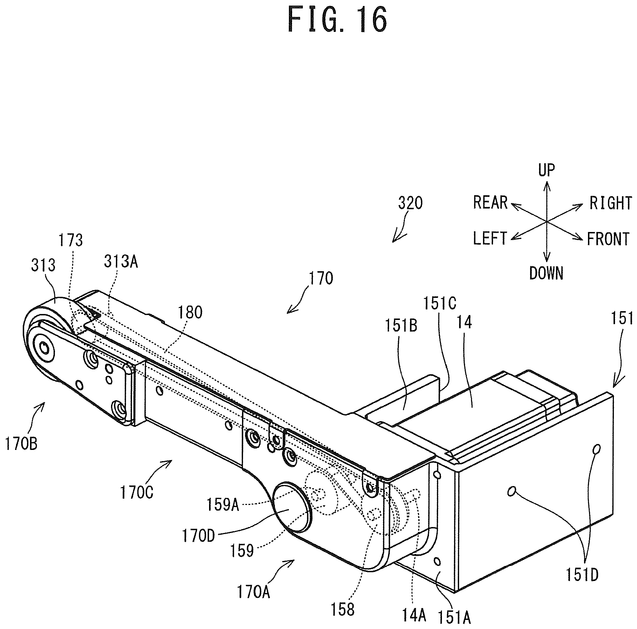

When the cloth feed mechanism 320 is attached to the mounting surface 2A of the base portion 2, the mounting member 140 is brought into a horizontal state such that an outer surface of the first bottom wall 141 is directed to the front and an outer surface of the second bottom wall 142 is directed to the right. A motor storage portion 151 (refer to FIG. 16) of the cloth feed mechanism 320 is disposed on an inner surface of the first bottom wall 141 such that the drive motor 14 (refer to FIG. 16) is closer to the second bottom wall 142 than a portion that supports the lower roller 313. The cloth feed mechanism 320 is fixed to the mounting member 140 by the tightening of screws, which are passed through the elongated holes 141A of the first bottom wall 141 of the mounting member 140, into screw holes 151D that are provided in a front wall of the motor storage portion 151 (refer to FIG. 16). The motor storage portion 151 can be fixed to the mounting member 140 within a range of the elongated holes 141A of the first bottom wall 141. The cloth feed mechanism 320 is in a state in which the lower roller 313 is positioned on the rear side of the cloth feed mechanism 320. The outer surface of the second bottom wall 142 is fixed to the mounting surface 2A of the base portion 2 using screws. The lower roller 313 faces the upper roller 18, and their surfaces come into contact with each other.

There are cases in which the operator wants to change the position in the left-right direction of the lower roller 313 with respect to the upper roller 18, depending on a bonding location etc. of the cloths. The cloth bonding apparatus 100 can adjust the position of the lower roller 313 in the left-right direction so that the lower roller 313 reliably faces the upper roller 18, by changing the position of the cloth feed mechanism 320 with respect to the first bottom wall 141 of the mounting member 140. The position of the cloth feed mechanism 320 can be adjusted within the range of the elongated holes 141A of the first bottom wall 141. The drive motor 14 that drives the lower roller 313 is assembled to the cloth feed mechanism 320. Therefore, it is possible to easily change the position of the cloth feed mechanism 320 together with the drive motor 14, without changing the structure by which the power of the drive motor 14 is transmitted to the lower roller 313.

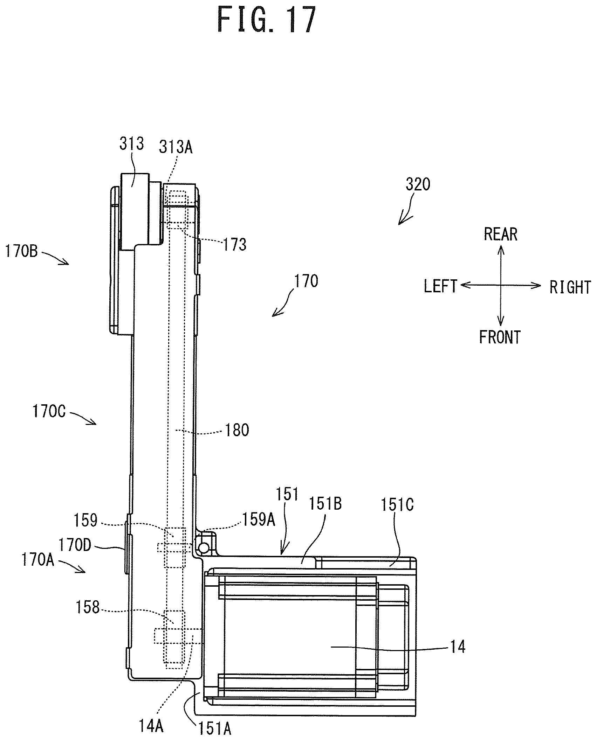

A structure of the cloth feed mechanism 320 will be explained with reference to FIG. 16 and FIG. 17. The cloth feed mechanism 320 is a unit that can be attached to and removed from the base portion 2 via the mounting member 140. The cloth feed mechanism 320 has a substantially L shape in a plan view. The cloth feed mechanism 320 is provided with the motor storage portion 151, the drive motor 14, the roller support portion 170, the lower roller 313 and a belt 180.

The motor storage portion 151 extends in the left-right direction, and the roller support portion 170 extends in the front-rear direction. The motor storage portion 151 is a substantially cuboid box body that is made of metal, and the upper surface and the right side surface are respectively open surfaces. The motor storage portion 151 is provided with a side wall 151A and a rear wall 151B, and internally stores the drive motor 14. The drive motor 14 is disposed such that the axial direction of the output shaft 14A is the left-right direction, and is fixed to the left wall 151A of the motor storage portion 151. The output shaft 14A protrudes to the left from a hole that is provided in the left wall 151A of the motor storage portion 151. The rear wall 151B of the motor storage portion 151 is provided with a cut out portion 151C having an L shape in a front view, in an upper right corner portion of the rear wall 151B.

The roller support portion 170 is a hollow box body that extends in the front-rear direction and both the front end and the rear end are closed. The roller support portion 170 is provided with a base end portion 170A, a leading end portion 170B and an intermediate portion 170C. The base end portion 170A is provided such that it is coupled to the left side of the left wall 151A of the motor storage portion 151. The leading end portion 170B is positioned to the rear of the base end portion 170A. The intermediate portion 170C is positioned between the leading end portion 170B and the base end portion 170A. A lower wall surface of the base end portion 170A is gently curved in an arc shape from the lower side to the upper side, from the front side toward the rear side.

A right wall of the base end portion 170A is provided integrally with the left wall 151A of the motor storage portion 151. The output shaft 14A of the drive motor 14 protrudes into the base end portion 170A from the hole that is provided in the left wall 151A of the motor storage portion 151. A left wall of the base end portion 170A is provided with a blocking portion 170D. The blocking portion 170D is a circular member that is provided on the left wall of the base end portion 170A. The blocking portion 170D blocks a circular hole that opens in the left wall of the base end portion 170A.

The roller support portion 170 is provided with a first pulley 158 and a tension pulley 159 inside the base end portion 170A. The first pulley 158 is disposed in front of the tension pulley 159. A rotating shaft of the first pulley 158 is fixed to the output shaft 14A of the drive motor 14. A rotating shaft 159A of the tension pulley 159 is disposed to the rear of the output shaft 14A. The rotating shaft 159A of the tension pulley 159 has an eccentric shaft on a right end portion of the rotating shaft 159A. The axis center of the eccentric shaft is displaced from the axis center of the rotating shaft 159A. The right wall of the base end portion 170A rotatably supports the eccentric shaft. A left end portion of the rotating shaft 159A has a groove. The groove is recessed in a left end surface of the rotating shaft 159A in the axial direction. A jig can be inserted to the groove. The operator removes the blocking portion 170D from the left wall of the base end portion 170A, and inserts the jig through the hole as far as the groove. When the operator rotates the jig, the tension pulley 159 swings around the eccentric shaft and the position of the tension pulley 159 is changed. Since the position of the tension pulley 159 is changed, a tension to be applied to the belt 180 can be adjusted.

An upper surface of the leading end portion 170B of the roller support portion 170 is positioned to the rear of the base end portion 170A in the horizontal direction. The roller support portion 170 is provided with the lower roller 313 on the right side of a left wall of the leading end portion 170B. The position of the lower roller 313 is a position between the left wall and a right wall of the leading end portion 170B. The rotating shaft 313A of the lower roller 313 is positioned inside the leading end portion 170B. The axial direction of the rotating shaft 313A of the lower shaft 313 and the axial direction of the output shaft 14A of the drive motor 14 are parallel to each other, and are orthogonal to the feed direction P (refer to FIG. 13). The leading end portion 170B rotatably supports the rotating shaft 313A. The roller support portion 170 is provided with a second pulley 173 inside the leading end portion 170B. The second pulley 173 rotates integrally with the lower roller 313 around the rotating shaft 313A of the lower roller 313 as a central axis. A rear wall surface of the leading end portion 170B has an opening in which the lower roller 313 can be disposed, and both the left and right sides of the opening are curved in an arc shape whose radius of curvature is smaller than that of an outer peripheral surface of the lower roller 313.

The roller support portion 170 internally houses the belt 180. The belt 180 is an endless timing belt and is formed of resin or the like. An inner side surface of the belt 180 is provided with a toothed portion. The toothed portion meshes with a toothed portion that is formed on a rolling contact surface of the first pulley 158 provided inside the base end portion 170A and a toothed portion that is formed on a rolling contact surface of the second pulley 173 provided inside the leading end portion 170B. The tension pulley 159 comes into contact with the outside of the belt 180 from below, and applies a tension to the belt 180. The belt 180 may be an endless belt that is not provided with the toothed portion on the inner side surface.

The cloth feed mechanism 320 structured as described above can change the fastening positions, where the screws are used to fix the cloth feed mechanism 320 to the mounting member 140, within the range of the elongated holes 141A. Therefore, in the left-right direction, the cloth feed mechanism 320 can adjust the facing position where the surface of the lower roller 313 comes into contact with the surface of the upper roller 18. The cloth feed mechanism 320 is fixed to the mounting member 140 in a state in which the motor storage portion 151 is directed further to the base portion 2 side than the roller support portion 170. Therefore, the motor storage portion 151 does not protrude to the left of the facing position where the surface of the lower roller 313 comes into contact with the surface of the upper roller 18. The roller support portion 170 has a narrow width and extends long in the front-rear direction. Therefore, when the operator feeds the cloths to the facing position along the upper surface of the roller support portion 170, the roller support portion 170 does not easily interfere with the cloths. Therefore, the operator can easily bond the cloths etc. that form, for example, a cylindrical shape after bonding.

As described above, the cloth feed mechanisms 12, 200, 250 and 320 of the cloth bonding apparatuses 1 and 100 of the above-described embodiment have the roller support portions 70, 220, 270 and 170, respectively, that are long and thin box bodies. Therefore, there is no interference between the cloths that form a three-dimensional shape after bonding and the leading end portions 70B, 220B, 270B and 170B, and the feeding of the cloths is not inhibited. Thus, the cloth bonding apparatuses 1 and 100 can bond the cloths that form a variety of shapes after bonding.

The axial direction of the output shaft 14A of the drive motor 14 is the same direction as the axial direction of the rotating shafts 13A, 213A, 263A and 313A of the lower rollers 13, 213, 263 and 313. Therefore, power transmission is performed using the belts 80 and 180, and it is possible to easily transmit power without changing the transmission direction of the power. It is thus possible to simplify the structures of the cloth feed mechanisms 12, 200, 250 and 320.

In the cloth bonding apparatuses 1 and 100, the drive motor 14 that occupies a relatively large space is disposed closer to the base portion 2 than the lower rollers 13, 213, 263 and 313 and the roller support portions 70, 220, 270 and 170. In the cloth bonding apparatuses 1 and 100, the drive motor 14 is not disposed on the outside of the apparatus, such as the base portion 2, with respect to the facing position of the upper roller 18 and the lower rollers 13, 213, 263 and 313, and it is thus possible to downsize the whole device.

The cloth feed mechanisms 12, 200, 250 and 320 are interchangeable with respect to the base portion 2. Since each of the cloth feed mechanisms 12, 200, 250 and 320 can be formed as a unit, one of the cloth feed mechanisms 12, 200, 250 and 320 that is appropriate for the cloths to be bonded together can be mounted on the cloth bonding apparatuses 1 and 100. Therefore, the cloth bonding apparatuses 1 and 100 can be applied to the bonding of a variety of forms of cloths.

The mounting members 40 and 140 can fix the cloth feed mechanisms 12, 200, 250 and 320 while moving them in the left-right direction. Therefore, the position of the cloth feed mechanisms 12, 200, 250 and 320 can be changed in the left-right direction such that the lower rollers 13, 213, 263 and 313 reliably face the upper roller 18.

In the cloth feed mechanisms 12 and 200, the lower rollers 13 and 213 are provided such that they are exposed to the outside from one of the left and right walls of the leading end portions 70B and 220B of the roller support portions 70 and 220, respectively. Therefore, the cloth bonding apparatus 1 can select one of the cloth feed mechanisms 12 and 200 that is appropriate for the cloths to be bonded together. In the cloth feed mechanisms 250 and 320, the lower rollers 263 and 313 are disposed between the left wall and the right wall of the leading end portions 270B and 170B of the roller support portions 270 and 170, respectively. Therefore, the cloth bonding apparatuses 1 and 100 can select one of the cloth feed mechanisms 250 and 320 that is appropriate for the cloths to be bonded together.

In the cloth feed mechanisms 12, 200 and 250, the leading end portions 70B, 220B and 270B of the roller support portions 70, 220 and 270 are vertically above the base end portions 70A, 220A and 270A, respectively, and also are in the same position in the feed direction P. Therefore, it is possible to easily bond, for example, cloths etc. that form a semispherical shape after bonding. In the cloth feed mechanism 320, the leading end portion 170B of the roller support portion 170 is in a position where the leading end portion 170B extends horizontally with respect to the base end portion 170A. Therefore, it is possible to easily bond, for example, cloths etc. that form a cylindrical shape after bonding. Thus, the cloth bonding apparatuses 1 and 100 can be applied to the bonding of cloths that form a variety shapes after bonding.

The present invention can be modified in various ways in addition to the above-described embodiment. In the cloth feed mechanism 12, although the roller support portion 70 and the motor storage portion 51 are coupled and provided, they may be separated from each other.

The cloth feed mechanism 12 uses the belt 80 to transmit the power of the drive motor 14 to the lower roller 13. However, for example, a plurality of gears may be coupled to transmit the power, or a chain and a sprocket may be used to transmit the power.

Although the lower roller 13 is provided on the outside of the left wall of the leading end portion 70B of the roller support portion 70, as long as the lower roller 13 is exposed to the outside from the left wall of the leading end portion 70B, only a part of the lower roller 13 on the left end portion side may be exposed to the outside from the left wall of the leading end portion 70B. Although the lower roller 213 is provided on the outside of the right wall of the leading end portion 220B of the roller support portion 220, as long as the lower roller 213 is exposed to the outside from the right wall of the leading end portion 220B, only a part of the lower roller 213 on the right end portion side may be exposed to the outside from the right wall of the leading end portion 220B.

The drive motor 14 is disposed on the base portion 2 side of the roller support portions 70, 220, 270 and 170. However, the drive motor 14 may be provided, for example, on the opposite side to the base portion 2 with respect to the roller support portions 70, 220, 270 and 170. The drive motor 14 may be disposed in front of or to the rear of the roller support portions 70, 220, 270 and 170.

In the cloth feed mechanisms 12, 200 and 250, the fastening positions, where the screws are used to fix the cloth feed mechanisms 12, 200 and 250 to the mounting member 40, can be changed in the left-right direction within the range of the elongated holes 44A. However, the fastening positions need not necessarily be changed. The cloth feed mechanisms 12, 200 and 250 may be formed integrally with the mounting member 40. In the cloth feed mechanism 320, the fastening positions, where the screws are used to fix the cloth feed mechanism 320 to the mounting member 140, can be changed in the left-right direction within the range of the elongated holes 141A. However, the fastening positions need not necessarily be changed. The cloth feed mechanism 320 may be formed integrally with the mounting member 140.

In the above-described embodiment, the upper roller 18 corresponds to a "first feed roller" of the present invention. The lower rollers 13, 213, 263 and 313 correspond to a "second feed roller" of the present invention. The roller support portions 70, 170, 220 and 270 correspond to a "feed arm portion" of the present invention. The drive motor 14 corresponds to a "drive portion" of the present invention. The belts 80 and 180 correspond to a "transmission portion" of the present invention. The left-right direction corresponds to a "first direction." The motor storage portions 51 and 151 correspond to a "drive storage portion" of the present invention. The mounting members 40 and 140 correspond to a "mounting portion" of the present invention.

## Claims

1. A cloth bonding apparatus (1) comprising:
a nozzle (17) that discharges an adhesive onto a cloth;
a first feed roller (18) that is disposed on a downstream side in a feed direction (P) of the cloth with respect to the nozzle and that feeds the cloth;
a second feed roller (13; 213; 263; 313) that clamps the cloth between the first feed roller and the second feed roller and feeds the cloth in cooperation with the first feed roller;
a base portion (2) that is a base of the cloth bonding apparatus; and
a cloth feed mechanism (12; 200; 250; 320) that is held by the base portion and that has the second feed roller,
wherein
the cloth feed mechanism includes a feed arm portion (70; 170; 220; 270), a drive portion (14) and a transmission portion (80; 180), the feed arm portion has a base end portion (70A; 170A; 220A; 270A) that is held by the base portion, and is provided with the second feed roller on a leading end portion (70B; 170B; 220B; 270B) on an opposite side to the base end portion, in a position below the first feed roller and facing the first feed roller, the drive portion (14) is provided on the base end portion and generates power that drives the second feed roller, and the transmission portion (80; 180) is provided in an intermediate portion (70C; 170C; 220C; 270C) between the leading end portion and the base end portion, and transmits the power generated by the drive portion to the second feed roller, **characterized in that** the cloth feed mechanism is capable of being attached to the base portion selectively between a first mode and a second mode, the first mode being a mode in which the feed arm portion extends in an up-down direction from the base end portion toward the leading end portion and in which the second feed roller is supported above the feed arm portion, and the second mode being a mode in which the feed arm portion extends in a horizontal direction from the base end portion toward the leading end portion and in which the second feed roller is supported horizontally from an upstream side in the feed direction.

2. The cloth bonding apparatus according to claim 1, wherein
an axial direction of an output shaft (14A) of the drive portion is a first direction that is orthogonal to the feed direction and that is parallel to an axial direction of the second feed roller.

3. The cloth bonding apparatus according to claim 2, wherein
the drive portion of the cloth feed mechanism is provided in a position that is closer to the base portion than the second feed roller and the transmission portion in the first direction.

4. The cloth bonding apparatus according to claim 2 or 3, wherein
the cloth feed mechanism includes
a drive storage portion (51; 151) that stores the drive portion, and the cloth bonding apparatus further includes
a mounting portion (40; 140) that is fixed to the base portion and that has a wall portion (44; 141) to which the drive storage portion is attached,
the wall portion has an elongated hole (44A; 141A) that has a major axis extending in the first direction, and
the drive storage portion of the cloth feed mechanism is capable of being attached to the mounting portion within a range of the elongated hole.

5. The cloth bonding apparatus according to claim 4, wherein
the intermediate portion of the feed arm portion has a cylindrical shape inside which the transmission portion is disposed,
the leading end portion of the feed arm portion is positioned on an extended line of the cylindrical shape of the intermediate portion, and
the second feed roller (13; 213) is exposed to the outside from one of both walls, in the first direction, of the leading end portion of the feed arm portion.

6. The cloth bonding apparatus according to claim 4, wherein
the intermediate portion of the feed arm portion has a cylindrical shape inside which the transmission portion is disposed,
the leading end portion of the feed arm portion is positioned on an extended line of the cylindrical shape of the intermediate portion, and
the second feed roller (263; 313) is positioned between both walls, in the first direction, of the leading end portion of the feed arm portion.

7. A cloth feed mechanism (12; 200; 250; 320) of a cloth bonding apparatus (1) that includes a first feed roller (18) that is disposed on a downstream side in a feed direction (P) of a cloth with respect to a nozzle (17), which discharges an adhesive onto the cloth, and that feeds the cloth, and a second feed roller (13; 213; 263; 313) that clamps the cloth between the first feed roller and the second feed roller and feeds the cloth in cooperation with the first feed roller, the cloth feed mechanism comprising:
a feed arm portion (70; 170; 220; 270) that includes a base end portion (70A; 170A; 220A; 270A) that is held by a base portion (2), which is a base of the cloth bonding apparatus, and is provided with the second feed roller on a leading end portion (70B; 170B; 220B; 270B) on an opposite side to the base end portion, in a position below the first feed roller and facing the first feed roller; a drive portion (14) that is provided on the base end portion and generates power that drives the second feed roller; and
a transmission portion (80; 180) that is provided in an intermediate portion (70C; 170C; 220C; 270C) between the leading end portion and the base end portion, and transmits the power generated by the drive portion to the second feed roller, **characterized in that** the cloth feed mechanism is capable of being attached to the base portion selectively between a first mode and a second mode, the first mode being a mode in which the feed arm portion extends in an up-down direction from the base end portion toward the leading end portion and in which the second feed roller is supported above the feed arm portion, and the second mode being a mode in which the feed arm portion extends in a horizontal direction from the base end portion toward the leading end portion and in which the second feed roller is supported horizontally from an upstream side in the feed direction.

8. The cloth feed mechanism according to claim 7, wherein
an axial direction of an output shaft (14A) of the drive portion is a first direction that is orthogonal to the feed direction and that is parallel to an axial direction of the second feed roller.

9. The cloth feed mechanism according to claim 8, wherein
the intermediate portion of the feed arm portion has a cylindrical shape inside which the transmission portion is disposed,
the leading end portion of the feed arm portion is positioned on an extended line of the cylindrical shape of the intermediate portion, and
the second feed roller (13; 213) is exposed to the outside from one of both walls, in the first direction, of the leading end portion of the feed arm portion.

10. The cloth feed mechanism according to claim 8, wherein
the intermediate portion of the feed arm portion has a cylindrical shape inside which the transmission portion is disposed,
the leading end portion of the feed arm portion is positioned on an extended line of the cylindrical shape of the intermediate portion, and
the second feed roller (263; 313) is positioned between both walls, in the first direction, of the leading end portion of the feed arm portion.

## Patentansprüche

1. Tuchfügegerät (1) mit:
einer Düse (17), die ein Klebemittel auf ein Tuch auslässt;
einer ersten Vorschubwalze (18), die an einer stromabwärtigen Seite in einer Vorschubrichtung (P) des Tuches hinsichtlich der Düse angeordnet ist und das Tuch vorschiebt;
einer zweiten Vorschubwalze (13; 213; 263; 313), die das Tuch zwischen der ersten Vorschubwalze und der zweiten Vorschubwalze klemmt und das Tuch in Zusammenwirkung mit der ersten Vorschubwalze vorschiebt;
einem Basisabschnitt (2), der eine Basis des Tuchfügegerätes ist; und
einem Tuchvorschubmechanismus (12; 200; 250; 320), der durch den Basisabschnitt gehalten ist und der die zweite Vorschubwalze aufweist, wobei
der Tuchvorschubmechanismus einen Vorschubarmabschnitt (70; 170; 220; 270), einen Antriebsabschnitt (14) und einen Übertragungsabschnitt (80; 180) aufweist, wobei der Vorschubarmabschnitt einen Basisendabschnitt (70A; 170A; 220A; 270A) aufweist, der durch den Basisabschnitt gehalten ist, und der mit der zweiten Vorschubwalze an einem voreilenden Endabschnitt (70B; 170B, 220B; 270B) an einer dem Basisendabschnitt gegenüberliegenden Seite an einer Position unter der ersten Vorschubwalze und der ersten Vorschubwalze zugewandt vorgesehen ist, wobei der Antriebsabschnitt (14) an dem Basisendabschnitt vorgesehen ist und eine Leistung erzeugt, die die zweite Vorschubwalze antreibt, und
wobei der Übertragungsabschnitt (80; 180) in einem Zwischenabschnitt (70C; 170C; 220C; 270C) zwischen dem voreilenden Endabschnitt und dem Basisendabschnitt vorgesehen ist und die durch den Antriebsabschnitt erzeugte Leistung zu der zweiten Vorschubwalze überträgt, **dadurch gekennzeichnet, dass**
der Tuchvorschubmechanismus an dem Basisabschnitt wahlweise zwischen einem ersten Modus und einem zweiten Modus anbringbar ist, wobei der erste Modus ein Modus ist, in dem sich der Vorschubarmabschnitt in einer Oben/Unten-Richtung von dem Basisendabschnitt zu dem voreilenden Endabschnitt erstreckt, und in dem die zweite Vorschubwalze über dem Vorschubarmabschnitt gestützt ist, und wobei der zweite Modus ein Modus ist, in dem sich der Vorschubarmabschnitt in einer horizontalen Richtung von dem Basisendabschnitt zu dem voreilenden Endabschnitt erstreckt, und in dem die zweite Vorschubwalze von einer stromaufwärtigen Seite in der Vorschubrichtung horizontal gestützt ist.

2. Tuchfügegerät gemäß Anspruch 1, wobei
eine axiale Richtung einer Abgabewelle (14A) des Antriebsabschnitts eine erste Richtung ist, die orthogonal zu der Vorschubrichtung ist, und die parallel zu einer axialen Richtung der zweiten Vorschubwalze ist.

3. Tuchfügegerät gemäß Anspruch 2, wobei
der Antriebsabschnitt des Tuchvorschubmechanismus an einer Position vorgesehen ist, die näher an dem Basisabschnitt als die zweite Vorschubwalze und der Übertragungsabschnitt in der ersten Richtung ist.

4. Tuchfügegerät gemäß Anspruch 2 oder 3, wobei
der Tuchvorschubmechanismus folgendes aufweist:
einen Antriebsaufnahmeabschnitt (51; 151), der den Antriebsabschnitt aufnimmt, und wobei das Tuchfügegerät des Weiteren folgendes aufweist:
einen Montageabschnitt (40; 140), der an dem Basisabschnitt befestigt ist, und der einen Wandabschnitt (44; 141) aufweist, an dem der Antriebsaufnahmeabschnitt angebracht ist,
wobei der Wandabschnitt ein längliches Loch (44A; 14A) hat, das eine Hauptachse hat, die sich in der ersten Richtung erstreckt; und
wobei der Antriebsaufnahmeabschnitt des Tuchvorschubmechanismus an dem Montageabschnitt innerhalb eines Bereiches des länglichen Loches anbringbar ist.

5. Tuchfügegerät gemäß Anspruch 4, wobei
der Zwischenabschnitt des Vorschubarmabschnitts eine zylindrische Form hat, in der der Übertragungsabschnitt angeordnet ist,
der voreilende Endabschnitt des Vorschubarmabschnitts an einer Erweiterungslinie der zylindrischen Form des Zwischenabschnitts positioniert ist, und
die zweite Vorschubwalze (13; 213) von einer der beiden Wände in der ersten Richtung des voreilenden Endabschnitts des Vorschubarmabschnitts zur Außenseite freiliegt.

6. Tuchfügegerät gemäß Anspruch 4, wobei
der Zwischenabschnitt des Vorschubarmabschnitts eine zylindrische Form hat, in der der Übertragungsabschnitt angeordnet ist,
wobei der voreilende Endabschnitt des Vorschubarmabschnitts an einer Erweiterungslinie der zylindrischen Form des Zwischenabschnitts positioniert ist, und
die zweite Vorschubwalze (263; 313) zwischen beiden Wänden in der ersten Richtung des voreilenden Endabschnitts des Vorschubarmabschnitts positioniert ist.

7. Tuchvorschubmechanismus (12; 200; 250; 320) eines Tuchfügegerätes (1), der eine erste Vorschubwalze (18) aufweist, die an einer stromabwärtigen Seite in einer Vorschubrichtung (P) eines Tuches hinsichtlich einer Düse (17) angeordnet ist, die ein Klebemittel auf das Tuch auslässt, und die das Tuch vorschiebt, und eine zweite Vorschubwalze (13; 213; 263; 313), die das Tuch zwischen der ersten Vorschubwalze und der zweiten Vorschubwalze einklemmt und das Tuch in Zusammenwirkung mit der ersten Vorschubwalze vorschiebt, wobei der Tuchvorschubmechanismus folgendes aufweist:
einen Vorschubarmabschnitt (70; 170; 220; 270), der einen Basisendabschnitt (70A; 170A; 220A; 270A) aufweist, der durch einen Basisabschnitt (2) gehalten ist, der eine Basis des Tuchfügegerätes ist, und der mit der zweiten Vorschubwalze an einem voreilenden Endabschnitt (70B; 170B; 220B; 270B) an einer dem Basisendabschnitt gegenüberliegenden Seite an einer Position unter der ersten Vorschubwalze und der ersten Vorschubwalze zugewandt versehen ist;
einen Antriebsabschnitt (14), der an dem Basisabschnitt vorgesehen ist und eine Leistung erzeugt, die die zweite Vorschubwalze antreibt; und
einen Übertragungsabschnitt (80; 180), der in einem Zwischenabschnitt (70C; 170C; 220C; 270C) zwischen dem voreilenden Endabschnitt und dem Basisendabschnitt vorgesehen ist, und der die durch den Antriebsabschnitt erzeugte Leistung zu der zweiten Vorschubwalze überträgt,
**dadurch gekennzeichnet, dass**
der Tuchvorschubmechanismus an dem Basisabschnitt wahlweise zwischen einem ersten Modus und einem zweiten Modus anbringbar ist, wobei der erste Modus ein Modus ist, in dem sich der Vorschubarmabschnitt in einer Oben/Unten-Richtung von dem Basisendabschnitt zu dem voreilenden Endabschnitt erstreckt, und in dem die zweite Vorschubwalze über dem Vorschubarmabschnitt gestützt ist, und wobei der zweite Modus ein Modus ist, in dem sich der Vorschubarmabschnitt in einer horizontalen Richtung von dem Basisendabschnitt zu dem voreilenden Endabschnitt erstreckt, und in dem die zweite Vorschubwalze von einer stromaufwärtigen Seite in der Vorschubrichtung horizontal gestützt ist.

8. Tuchvorschubmechanismus gemäß Anspruch 7, wobei
eine axiale Richtung einer Abgabewelle (14A) des Antriebsabschnitts eine erste Richtung ist, die orthogonal zu der Vorschubrichtung ist, und die parallel zu einer axialen Richtung der zweiten Vorschubwalze ist.

9. Tuchvorschubmechanismus gemäß Anspruch 8, wobei
der Zwischenabschnitt des Vorschubarmabschnitts eine zylindrische Form hat, in der der Übertragungsabschnitt angeordnet ist,
der voreilende Endabschnitt des Vorschubarmabschnitts an einer Erweiterungslinie der zylindrischen Form des Zwischenabschnitts positioniert ist, und
die zweite Vorschubwalze (13; 213) von einer der beiden Wände in der ersten Richtung des voreilenden Endabschnitts des Vorschubarmabschnitts zur Außenseite freiliegt.

10. Tuchvorschubmechanismus gemäß Anspruch 8, wobei
der Zwischenabschnitt des Vorschubarmabschnitts eine zylindrische Form hat, in der der Übertragungsabschnitt angeordnet ist,
der voreilende Endabschnitt des Vorschubarmabschnitts an einer Erweiterungslinie der zylindrischen Form des Zwischenabschnitts positioniert ist, und
die zweite Vorschubwalze (263; 313) zwischen beiden Wänden in der ersten Richtung des voreilenden Endabschnitts des Vorschubarmabschnitts positioniert ist.

## Revendications

1. Appareil de liage de tissu (1), comprenant :
une buse (17) qui évacue un adhésif sur un tissu ;
un premier rouleau de fourniture (18) qui est disposé sur un côté en aval dans une direction de fourniture (P) du tissu par rapport à la buse et qui fournit le tissu ;
un second rouleau de fourniture (13 ; 213 ; 263 ; 313) qui serre le tissu entre le premier rouleau de fourniture et le second rouleau de fourniture et fournit le tissu en coopération avec le premier rouleau de fourniture ;
une portion de base (2) qui est une base de l'appareil de liage de tissu ; et
un mécanisme de fourniture en tissu (12 ; 200 ; 250 ; 320) qui est retenu par la portion de base et qui a le second rouleau de fourniture,
dans lequel
le mécanisme de fourniture en tissu inclut une portion à bras de fourniture (70 ; 170 ; 220 ; 270), une portion d'entraînement (14) et une portion de transmission (80 ; 180),
la portion à bras de fourniture a une portion d'extrémité de base (70A ; 170A ; 220A ; 270A) qui est retenue par la portion de base, et est pourvue du second rouleau de fourniture sur une portion d'extrémité avant (70B ; 170B ; 220B ; 270B) sur un côté opposé à la portion d'extrémité de base, dans une position en dessous du premier rouleau de fourniture et faisant face au premier rouleau de fourniture,
la portion d'entraînement (14) est prévue sur la portion d'extrémité de base et génère une puissance qui entraîne le second rouleau de fourniture, et
la portion de transmission (80 ; 180) est prévue dans une portion intermédiaire (70C ; 170C ; 220C ; 270C) entre la portion d'extrémité avant et la portion d'extrémité de base, et transmet la puissance générée par la portion d'entraînement au second rouleau de fourniture, **caractérisé en ce que**
le mécanisme de fourniture en tissu est capable d'être attaché à la portion de base sélectivement entre un premier mode et un second mode, le premier mode étant un mode dans lequel la portion à bras de fourniture s'étend dans une direction verticale à partir de la portion d'extrémité de base vers la portion d'extrémité avant et dans lequel le second rouleau de fourniture est supporté au-dessus de la portion à bras de fourniture, et le second mode étant un mode dans lequel la portion à bras de fourniture s'étend dans une direction horizontale à partir de la portion d'extrémité de base vers la portion d'extrémité avant et dans lequel le second rouleau de fourniture est supporté horizontalement à partir d'un côté en amont dans la direction de fourniture.

2. Appareil de liage de tissu selon la revendication 1, dans lequel
une direction axiale d'un arbre de sortie (14A) de la portion d'entraînement est une première direction qui est orthogonale à la direction de fourniture et qui est parallèle à une direction axiale du second rouleau de fourniture.

3. Appareil de liage de tissu selon la revendication 2, dans lequel
la portion d'entraînement du mécanisme de fourniture en tissu est prévue dans une position qui est plus près de la portion de base que le second rouleau de fourniture et la portion de transmission dans la première direction.

4. Appareil de liage de tissu selon la revendication 2 ou 3, dans lequel le mécanisme de fourniture en tissu inclut
une portion de stockage d'entraînement (51 ; 151) qui stocke la portion d'entraînement, et
l'appareil de liage de tissu inclut en outre
une portion de montage (40 ; 140) qui est fixée à la portion de base et qui a une portion à paroi (44 ; 141) à laquelle la portion de stockage d'entraînement est attachée,
la portion à paroi a un trou allongé (44A ; 141A) qui a un grand axe s'étendant dans la première direction, et
la portion de stockage d'entraînement du mécanisme de fourniture en tissu est capable d'être attachée à la portion de montage au sein d'une distance du trou allongé.

5. Appareil de liage de tissu selon la revendication 4, dans lequel
la portion intermédiaire de la portion à bras de fourniture a une forme cylindrique à l'intérieur de laquelle la portion de transmission est disposée,
la portion d'extrémité avant de la portion à bras de fourniture est positionnée sur une ligne étendue de la forme cylindrique de la portion intermédiaire, et
le second rouleau de fourniture (13 ; 213) est exposé à l'extérieur à partir de l'une des deux parois, dans la première direction, de la portion d'extrémité avant de la portion à bras de fourniture.

6. Appareil de liage de tissu selon la revendication 4, dans lequel
la portion intermédiaire de la portion à bras de fourniture a une forme cylindrique à l'intérieur de laquelle la portion de transmission est disposée,
la portion d'extrémité avant de la portion à bras de fourniture est positionnée sur une ligne étendue de la forme cylindrique de la portion intermédiaire, et
le second rouleau de fourniture (263 ; 313) est positionné entre les deux parois, dans la première direction, de la portion d'extrémité avant de la portion à bras de fourniture.

7. Mécanisme de fourniture en tissu (12 ; 200 ; 250 ; 320) d'un appareil de liage de tissu (1) qui inclut un premier rouleau de fourniture (18) qui est disposé sur un côté en aval dans une direction de fourniture (P) d'un tissu par rapport à une buse (17), qui évacue un adhésif sur le tissu, et qui fournit le tissu, et un second rouleau de fourniture (13 ; 213 ; 263 ; 313) qui serre le tissu entre le premier rouleau de fourniture et le second rouleau de fourniture et fournit le tissu en coopération avec le premier rouleau de fourniture, le mécanisme de fourniture en tissu comprenant :
une portion à bras de fourniture (70 ; 170 ; 220 ; 270) qui inclut une portion d'extrémité de base (70A ; 170A ; 220A ; 270A) qui est retenue par une portion de base (2), qui est une base de l'appareil de liage de tissu, et est pourvue du second rouleau de fourniture sur une portion d'extrémité avant (70B ; 170B ; 220B ; 270B) sur un côté opposé à la portion d'extrémité de base, dans une position en dessous du premier rouleau de fourniture et faisant face au premier rouleau de fourniture ;
une portion d'entraînement (14) qui est prévue sur la portion d'extrémité de base et génère une puissance qui entraîne le second rouleau de fourniture ; et
une portion de transmission (80 ; 180) qui est prévue dans une portion intermédiaire (70C ; 170C ; 220C ; 270C) entre la portion d'extrémité avant et la portion d'extrémité de base, et transmet la puissance générée par la portion d'entraînement au second rouleau de fourniture,
**caractérisé en ce que**
le mécanisme de fourniture en tissu est capable d'être attaché à la portion de base sélectivement entre un premier mode et un second mode, le premier mode étant un mode dans lequel la portion à bras de fourniture s'étend dans une direction verticale à partir de la portion d'extrémité de base vers la portion d'extrémité avant et dans lequel le second rouleau de fourniture est supporté au-dessus de la portion à bras de fourniture, et le second mode étant un mode dans lequel la portion à bras de fourniture s'étend dans une direction horizontale à partir de la portion d'extrémité de base vers la portion d'extrémité avant et dans lequel le second rouleau de fourniture est supporté horizontalement à partir d'un côté en amont dans la direction de fourniture.

8. Mécanisme de fourniture en tissu selon la revendication 7, dans lequel
une direction axiale d'un arbre de sortie (14A) de la portion d'entraînement est une première direction qui est orthogonale à la direction de fourniture et qui est parallèle à une direction axiale du second rouleau de fourniture.

9. Mécanisme de fourniture en tissu selon la revendication 8, dans lequel
la portion intermédiaire de la portion à bras de fourniture a une forme cylindrique à l'intérieur de laquelle la portion de transmission est disposée,
la portion d'extrémité avant de la portion à bras de fourniture est positionnée sur une ligne étendue de la forme cylindrique de la portion intermédiaire, et
le second rouleau de fourniture (13 ; 213) est exposé à l'extérieur à partir de l'une des deux parois, dans la première direction, de la portion d'extrémité avant de la portion à bras de fourniture.

10. Mécanisme de fourniture en tissu selon la revendication 8, dans lequel
la portion intermédiaire de la portion à bras de fourniture a une forme cylindrique à l'intérieur de laquelle la portion de transmission est disposée,
la portion d'extrémité avant de la portion à bras de fourniture est positionnée sur une ligne étendue de la forme cylindrique de la portion intermédiaire, et
le second rouleau de fourniture (263 ; 313) est positionné entre les deux parois, dans la première direction, de la portion d'extrémité avant de la portion à bras de fourniture.
